# EUROPEAN PATENT APPLICATION

(11) **EP 4 539 540 A1**
(43) Date of publication of application: **16.04.2025**
(21) Application number: 23819034.2
(22) Date of filing: 02.06.2023
(51) Int. Cl.: H04W 36/00

(54) **ACCESS METHOD AND COMMUNICATION APPARATUS**

(30) Priority: 10.06.2022 CN 202210655655
(71) Applicant: Huawei Technologies Co., Ltd., Shenzhen, Guangdong 518129 (CN)
(72) Inventor: WU, Xiaoning, Shenzhen, Guangdong 518129 (CN); HU, Xingxing, Shenzhen, Guangdong 518129 (CN); GENG, Tingting, Shenzhen, Guangdong 518129 (CN)
(74) Representative: Gill Jennings & Every LLP
(86) International application number: PCT/CN2023/098057
(87) International publication number: WO 2023/236869

(57) **Abstract**

An access method and a communication apparatus are provided. The method includes: A terminal device receives first indication information from a first network device, receives access indication information from a second network device, and initiates access to a target cell of the second network device based on the access indication information. The first indication information indicates the terminal device to initiate the access to the target cell of the second network device based on the access indication information from the second network device. After being indicated to receive the access indication information from the second network device, the terminal device initiates the access to the target cell of the second network device. This can improve a success rate of accessing the second network device by the terminal device.

## Description

### CROSS-REFERENCE TO RELATED APPLICATIONS

This application claims priority to Chinese Patent Application No. 202210655655.7, filed with the China National Intellectual Property Administration on June 10, 2022 and entitled "ACCESS METHOD AND COMMUNICATION APPARATUS", which is incorporated herein by reference in its entirety.

### TECHNICAL FIELD

This application relates to the field of wireless communication technologies, and in particular, to an access method and a communication apparatus.

### BACKGROUND

If a serving base station of a terminal device stops providing a communication service for the terminal device, the terminal device is handed over from the serving base station to another base station, for example, to a target base station. There may be a plurality of terminal devices served by the serving base station. In this case, when all the terminal devices need to be handed over, the plurality of terminal devices may simultaneously access the target base station. When a large quantity of terminal devices simultaneously access the target base station, if the terminal devices that simultaneously access the target base station access the target base station in a contention access manner, an access success rate of each terminal device is reduced. If the plurality of terminal devices that simultaneously access the target base station access the target base station in a non-contention access manner, the target base station needs to allocate a large quantity of resources to the terminal devices to be accessed, resulting in large resource overheads.

### SUMMARY

This application provides an access method and a communication apparatus, to improve a success rate of accessing a network by a terminal device and reduce resource overheads.

According to a first aspect, an embodiment of this application provides an access method. The method may be performed by a first communication apparatus. The first communication apparatus may be a communication device or a communication apparatus, for example, a chip system, that can support the communication device in implementing a function needed in the method. For example, the first communication apparatus is a terminal device, a chip disposed in the terminal device, or another component configured to implement a function of the terminal device. The following uses an example in which the communication device is the terminal device for description.

The access method includes: The terminal device receives first indication information from a first network device, receives access indication information from a second network device, and initiates access to a target cell of the second network device based on the access indication information. The first indication information indicates the terminal device to initiate the access to the target cell of the second network device based on the access indication information from the second network device. The first network device may be considered as a source base station, and the second network device may be considered as a target base station. The first indication information from the first network device indicates the terminal device to initiate the access to the target cell of the second network device based on the access indication information from the second network device. In other words, the terminal device initiates the access, which is scheduled by the second network device. For example, when a small quantity of terminal devices access the target cell at specific time, the second network device may indicate the terminal devices to access the target cell. For example, when determining that a small quantity of terminal devices access the target cell within same time or on same time-frequency resources, the second network device indicates the terminal devices to access the target cell. For the terminal device, after receiving the access indication information from the second network device, the terminal device initiates the access to the target cell. For a terminal device that accesses the second network device in a contention access manner, a success rate of accessing the second network device by the terminal device can be improved. For a terminal device that accesses the second network device in a non-contention access manner, resource overheads can be reduced.

In a possible implementation, the first indication information is included in access rule information, and the access rule information further includes a first duration. That the terminal device receives access indication information from a second network device includes: The terminal device receives the access indication information within the first duration. The access rule information may indicate a rule that the terminal device needs to comply with when accessing a network. For example, the access rule information includes the first indication information. In addition, the access rule information may further include the first duration, to indicate the terminal device to receive the access indication information within the first duration. That is, if the terminal device does not receive the access indication information within the first duration, the terminal device may alternatively initiate the access to the target cell after the first duration. Therefore, it is avoided that the terminal device cannot access the network because the terminal device cannot receive the access indication information, so that continuity of communication performed by the terminal device is ensured.

In a possible implementation, that the terminal device receives the access indication information within the first duration includes: The terminal device receives the access indication information within the first duration after disconnecting a connection to the first network device. It may be understood that start time of the first duration is time at which the terminal device disconnects the connection to the first network device. The terminal device receives the access indication information within the first duration after disconnecting the connection to the first network device. Correspondingly, the second network device sends the access indication information after the terminal device disconnects the connection to the first network device, to avoid sending unnecessary access indication information, thereby reducing signaling overheads.

In a possible implementation, the first indication information is included in the access rule information, and the access rule information further includes cell information. The cell information indicates the target cell, and the terminal device receives the access indication information in the target cell. It may be understood that when the terminal device is handed over from the first network device to the second network device, a cell configured in the network may remain unchanged or may change. If the cell configured in the network is unchanged, the terminal device knows a cell in which the access indication information can be received. If the cell configured in the network changes, the terminal device does not know a target cell served by the second network device. Therefore, the first network device may provide, for the terminal device, the target cell served by the second network device, so that the terminal device receives the access indication information in the target cell. In this way, a success rate of receiving, by the terminal device, the access indication information from the second network device can be improved, so that the terminal device can successfully access the target cell of the second network device.

In a possible implementation, that the terminal device initiates access to a target cell of the second network device based on the access indication information includes: The terminal device initiates the access to the target cell based on the access indication information after disconnecting the connection to the first network device.

In a possible implementation, the method further includes: The terminal device receives second indication information from the first network device or the second network device, where the second indication information indicates the terminal device to select a first reference signal. The first reference signal belongs to at least one reference signal corresponding to the target cell, and the first reference signal is used for radio link detection and/or beam failure detection. The first network device or the second network device re-indicates, to the terminal device, the first reference signal corresponding to the target cell, to avoid an incorrect radio link detection result and/or an incorrect beam failure detection result that are/is caused when the terminal device performs radio link detection and/or beam failure detection based on an originally configured reference signal because a beam on which the terminal device is located changes.

In a possible implementation, the second indication information includes any one of the following:
(1) Configuration information of the first reference signal. That is, the configuration information of the reference signal under the target cell is provided for the terminal device, which is direct.
(2) First information and second information. The first information indicates configuration information of the at least one reference signal corresponding to the target cell, and the second information includes an index of the configuration information of the first reference signal. Configuration information of all reference signals (namely, the at least one reference signal) under the target cell may be predefined, preconfigured, or indicated. In addition, the first network device or the second network device only needs to provide the index of the configuration information of the first reference signal, and does not need to separately provide the configuration information of the first reference signal each time, thereby reducing signaling overheads.
(3) A mapping relationship between the at least one reference signal corresponding to a source cell and the at least one reference signal corresponding to the target cell, where the source cell is managed by the first network device. The first network device or the second network device may provide the mapping relationship between the at least one reference signal corresponding to the source cell and the at least one reference signal corresponding to the target cell, so that the terminal device may determine the first reference signal based on the reference signal in the source cell and the mapping relationship.
(4) A mapping relationship between configuration information of the at least one reference signal corresponding to the target cell and a geographical location area. The geographical area covered by the target cell may be divided into a plurality of areas, and each area has a corresponding reference signal. In this case, there is a mapping relationship between a configuration of the at least one reference signal corresponding to the target cell and one or more areas obtained by dividing the target cell. The location area of the terminal device belongs to the one or more areas obtained by dividing the target cell, so that the terminal device may determine the first reference signal based on the location area of the terminal device and the mapping relationship.

In a possible implementation, the access indication information includes third indication information, the third indication information indicates a second reference signal, and the second reference signal is used to determine an access occasion. The second network device may further provide the second reference signal for the terminal device, so that the terminal device determines a proper access occasion, thereby ensuring a success rate of accessing the network.

In a possible implementation, the access indication information includes fourth indication information, and the fourth indication information includes a first time interval, indicating the terminal device to initiate the access to the target cell after the first time interval since the terminal device receives the access indication information. Different terminal devices correspond to different first time intervals, so that the different terminal devices send access to the target cell at different time.

In a possible implementation, the method further includes: The terminal device receives trigger rule information from the first network device, where the trigger rule information indicates the terminal device not to initiate the access to the target cell before the first time. Then, the terminal device initiates the access to the target cell after the first time when determining that a preset condition is met. The first time is indicated by the first network device. The preset condition includes: signal quality of the source cell is lower than a preset threshold, or the source cell stops a service. That the terminal device does not initiate the access to the target cell before the first time may be understood as that when determining to initiate the access to the target cell, the terminal device does not immediately initiate the access to the target cell, but waits for a period of time, for example, the first time, and then initiates the access to the target cell. In this way, for the different terminal devices, the network device may configure the different first time, to avoid that the plurality of terminal devices simultaneously access the network.

In a possible implementation, the first time is carried in a radio resource control (radio resource control, RRC) message that includes conditional handover (conditional handover, CHO) configuration information or handover (handover, HO) configuration information. A network side may provide the first time for the terminal device by using a handover command, to reduce signaling overheads.

In a possible implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration. It may be understood that the CHO configuration information includes the time-based trigger condition, namely, the second time and the second duration. The network side may reuse the time-based trigger condition in the CHO configuration information to indicate the first time. For example, the first time is the second time, or the first time is the sum of the second time and the second duration. Therefore, the first time does not need to be separately indicated.

In a possible implementation, the method further includes: After accessing the second network device, the terminal device reserves a first part configuration of a media access control (media access control, MAC) layer, and deletes a second part configuration of the MAC layer. That is, after accessing the second network device, the terminal device deletes some configurations of the MAC layer, and reserves some configurations of the MAC layer. In this way, some configurations of the MAC layer may be inherited in a subsequent access configuration, thereby simplifying a configuration procedure of accessing the network, ensuring configuration continuity, and improving system performance.

According to second aspect, an embodiment of this application provides an access method. The method may be performed by a first communication apparatus. The first communication apparatus may be a communication device or a communication apparatus, for example, a chip system, that can support the communication device in implementing a function needed in the method. For example, the first communication apparatus is a first network device, a chip disposed in the first network device, or another component configured to implement a function of the first network device. The following uses an example in which the communication device is the first network device for description. The first network device may also be understood as a base station that currently serves a terminal device, and is also referred to as a source base station.

The access method includes: The first network device determines first indication information, and sends the first indication information to the terminal device. The first indication information indicates the terminal device to initiate access to a target cell of a second network device based on access indication information from the second network device. The first network device indicates, by using the first indication information, the terminal device to initiate the access to the target cell of the second network device based on the access indication information from the second network device. If the terminal device does not receive, based on the indication of the first indication information, the access indication information from the second network device, the terminal device may not initiate the access to the target cell of the second network device, to avoid time or time-frequency resource conflict with another terminal device for initiating the access, so that a success rate of accessing the second network device by the terminal device can be improved, and resource overheads can be reduced.

In a possible implementation, the first indication information is included in access rule information, the access rule information further includes a first duration, and the first duration indicates the terminal device to receive the access indication information within the first duration.

In a possible implementation, the first indication information is included in the access rule information, the access rule information further includes cell information, and the cell information indicates the terminal device to receive the access indication information in the target cell.

In a possible implementation, the method further includes: The first network device sends second indication information to the terminal device, where the second indication information indicates the terminal device to select a first reference signal. The first reference signal belongs to at least one reference signal corresponding to the target cell, and the first reference signal is used for radio link detection and/or beam failure detection.

In a possible implementation, the second indication information includes any one of the following:
configuration information of the first reference signal; first information and second information, where the first information indicates configuration information of the at least one reference signal of the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In a possible implementation, the access indication information includes third indication information, the third indication information indicates a second reference signal, and the second reference signal is used to determine an access occasion.

In a possible implementation, the access indication information includes fourth indication information, and the fourth indication information includes a first time interval, indicating the terminal device to initiate the access to the target cell after the first time interval since the terminal device receives the access indication information.

In a possible implementation, the method further includes: The first network device sends trigger rule information to the terminal device, where the trigger rule information indicates the terminal device not to initiate the access to the target cell before first time, and the first time is indicated by the first network device.

In a possible implementation, the first time is carried in an RRC message including CHO configuration information.

In a possible implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration.

For technical effects achieved by the second aspect or the possible implementations of the second aspect, refer to descriptions of technical effects of the first aspect or the possible implementations of the first aspect.

According to a third aspect, an embodiment of this application provides an access method. The method may be performed by a third communication apparatus. The third communication apparatus may be a communication device or a communication apparatus, for example, a chip system, that can support the communication device in implementing a function needed in the method. For example, the third communication apparatus is a second network device, a chip disposed in the second network device, or another component configured to implement a function of a second network device. The following uses an example in which the communication device is the second network device for description. The second network device may also be understood as a network device to which the terminal device is to be handed over, and is also referred to as a target network device.

The access method includes: The second network device determines the access indication information, and separately sends the access indication information to one or more terminal devices, to indicate the one or more terminal devices to separately initiate access to a target cell of the second network device. After receiving first indication information from a first network device, the one or more terminal devices separately initiate the access to the target cell based on the access indication information. The second network device schedules, by using second indication information, each terminal device to access the target cell. For example, the second network device may send the access indication information to the terminal device when a small quantity of terminal devices access the target cell at specific time, to improve a success rate of accessing the second network device by the terminal devices, and reduce resource overheads.

In a possible implementation, that the second network device separately sends the access indication information to one or more terminal devices includes: The second network device separately sends the access indication information to the plurality of terminal devices, where the second network device sends the access indication information to the terminal devices on different sending occasions, or the second network device separately sends, to the plurality of terminal devices on different sending occasions, the access indication information indicating time-frequency resources used to initiate the access, and different time-frequency resources are configured for the plurality of terminal devices. Because the terminal device initiates the access to the target cell only after receiving the access indication information, if the access indication information corresponding to different terminal devices has different sending occasions, a quantity of terminal devices that simultaneously access the second network device can be reduced, thereby improving a success rate of accessing the second network device by each terminal device. In addition, if the terminal device accesses the second network device in a contention manner, because a small quantity of terminal devices simultaneously access the second network device, a small quantity of resources need to be allocated by the second network device, so that resource overheads can be reduced. Alternatively, the access indication information corresponding to the different terminal devices indicates different time-frequency resources, so that a quantity of terminal devices that simultaneously contend for accessing the second network device by using same resources can be reduced, thereby improving a success rate of accessing the second network device by each terminal device.

In a possible implementation, the method further includes: The second network device separately sends second indication information to the one or more terminal devices, where the second indication information indicates the one or more terminal devices to select a first reference signal. The first reference signal belongs to at least one reference signal corresponding to the target cell, and the first reference signal is used for radio link detection and/or beam failure detection.

In a possible implementation, the second indication information includes any one of the following:
configuration information of the first reference signal; first information and second information, where the first information indicates configuration information of the at least one reference signal of the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In a possible implementation, the access indication information includes third indication information, the third indication information indicates a second reference signal, and the second reference signal is used to determine an access occasion.

In a possible implementation, the access indication information includes fourth indication information, and the fourth indication information includes a first time interval, indicating the terminal device to initiate the access to the target cell after the first time interval since the terminal device receives the access indication information.

For technical effects achieved by the third aspect or the possible implementations of the third aspect, refer to descriptions of technical effects of the first aspect or the possible implementations of the first aspect.

According to a fourth aspect, an embodiment of this application provides an access method. The method may be performed by a second communication apparatus. The second communication apparatus may be a communication device or a communication apparatus, for example, a chip system, that can support the communication device in implementing a function needed in the method. For example, the second communication apparatus is a terminal device, a chip disposed in the terminal device, or another component configured to implement a function of the terminal device. The following uses an example in which the communication device is the terminal device for description.

The access method includes: The terminal device receives trigger rule information from a first network device, where the trigger rule information indicates the terminal device not to initiate access to a target cell of a second network device before first time. Then, the terminal device initiates the access to the target cell after the first time when determining that a preset condition is met. The first time is indicated by the first network device. The preset condition includes: signal quality of the source cell is lower than a preset threshold, or the source cell stops a service. That the terminal device does not initiate the access to the target cell before the first time may be understood as that when determining to initiate the access to the target cell, the terminal device does not immediately initiate the access to the target cell, but waits for a period of time, for example, the first time, and then initiates the access to the target cell. Different first time is configured for different terminal devices, to avoid that a plurality of terminal devices simultaneously access the second network device.

In a possible implementation, the first time is carried in an RRC message including CHO configuration information.

In a possible implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration.

In a possible implementation, the method further includes: The terminal device receives second indication information from the first network device or the second network device, where the second indication information indicates the terminal device to select a first reference signal. The first reference signal belongs to at least one reference signal corresponding to the target cell, and the first reference signal is used for radio link detection and/or beam failure detection.

In a possible implementation, the second indication information includes any one of the following:
configuration information of the first reference signal; first information and second information, where the first information indicates configuration information of the at least one reference signal, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In a possible implementation, the method further includes: After accessing the second network device, the terminal device reserves a first part configuration of a MAC layer, and deletes a second part configuration of the MAC layer.

For technical effects achieved by the fourth aspect or the possible implementations of the fourth aspect, refer to descriptions of technical effects of the first aspect or the possible implementations of the first aspect.

According to a fifth aspect, an embodiment of this application provides an access method. The method may be performed by a second communication apparatus. The second communication apparatus may be a communication device or a communication apparatus, for example, a chip system, that can support the communication device in implementing a function needed in the method. For example, the second communication apparatus is a first network device, a chip disposed in the first network device, or another component configured to implement a function of the first network device. The following uses an example in which the communication device is the first network device for description.

The access method includes: The first network device determines trigger rule information, and sends the trigger rule information to a terminal device. The trigger rule information indicates the terminal device not to initiate access to a target cell of a second network device before first time. The first time is indicated by the first network device. That the terminal device does not initiate the access to the target cell before the first time may be understood as that when determining to initiate the access to the target cell, the terminal device does not immediately initiate the access to the target cell, but waits for a period of time, for example, the first time, and then initiates the access to the target cell. In this way, for different terminal devices, the first network device may configure different first time, to avoid that a plurality of terminal devices simultaneously access a network.

In a possible implementation, the different terminal devices correspond to the different first time.

In a possible implementation, the first time is carried in an RRC message including CHO configuration information.

In a possible implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration.

In a possible implementation, the method further includes: The first network device sends second indication information to the terminal device, where the second indication information indicates the terminal device to select a first reference signal. The first reference signal belongs to at least one reference signal corresponding to the target cell, and the first reference signal is used for radio link detection and/or beam failure detection.

In a possible implementation, the second indication information includes any one of the following:
configuration information of the first reference signal; first information and second information, where the first information indicates configuration information of the at least one reference signal, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

For technical effects achieved by the fifth aspect or the possible implementations of the fifth aspect, refer to descriptions of technical effects of the first aspect or the possible implementations of the first aspect.

According to a sixth aspect, an embodiment of this application provides a communication apparatus. The communication apparatus has a function of implementing behavior in the method embodiment of any one of the first aspect to the fifth aspect. For beneficial effects, refer to descriptions of the first aspect to the fifth aspect. Details are not described herein again.

The communication apparatus may be the terminal device in the first aspect (or the fourth aspect), or the communication apparatus may be an apparatus that can implement the method provided in the first aspect (or the fourth aspect), for example, a chip or a chip system. In a possible design, the communication apparatus includes a corresponding means (means) or module configured to perform the method in the first aspect (or the fourth aspect). For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general name of a sending unit and a receiving unit, and the sending unit and the receiving unit may be different functional modules. These units (modules) may perform a corresponding function in the method example of the first aspect (or the fourth aspect). For details, refer to the detailed descriptions in the method example. Details are not described herein again.

The communication apparatus may be the first network device in the second aspect (or the fifth aspect), or the communication apparatus may be an apparatus that can implement the method provided in the second aspect (or the fifth aspect), for example, a chip or a chip system. In a possible design, the communication apparatus includes a corresponding means (means) or module configured to perform the method in the second aspect (or the fifth aspect). For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general name of a sending unit and a receiving unit, and the sending unit and the receiving unit may be different functional modules. These units (modules) may perform a corresponding function in the method example of the second aspect (or the fifth aspect). For details, refer to the detailed descriptions in the method example. Details are not described herein again.

The communication apparatus may be the second network device in the third aspect, or the communication apparatus may be an apparatus that can implement the method provided in the third aspect, for example, a chip or a chip system. In a possible design, the communication apparatus includes a corresponding means (means) or module configured to perform the method in the third aspect. For example, the communication apparatus includes a processing unit (sometimes also referred to as a processing module or a processor) and/or a transceiver unit (sometimes also referred to as a transceiver module or a transceiver). The transceiver unit may include a sending unit and a receiving unit, or may be understood as that the sending unit and the receiving unit are a same functional module. Alternatively, the transceiver unit is also understood as a general name of a sending unit and a receiving unit, and the sending unit and the receiving unit may be different functional modules. These units (modules) may perform a corresponding function in the method example of the third aspect. For details, refer to detailed descriptions in the method example. Details are not described herein again.

According to a seventh aspect, an embodiment of this application provides a communication apparatus. The communication apparatus may be the communication apparatus in the sixth aspect, or a chip or a chip system disposed in the communication apparatus in the sixth aspect. The communication apparatus may be a terminal device, a first network device, or a second network device. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the terminal device, the first network device, or the second network device in the foregoing method.

According to an eighth aspect, an embodiment of this application provides a communication apparatus. The communication apparatus includes an input/output interface and a logic circuit. The input/output interface is configured to input and/or output information. The logic circuit is configured to perform the method according to any one of the first aspect to the fifth aspect.

According to a ninth aspect, an embodiment of this application provides a chip system. The chip system includes a processor, and may further include: a memory and/or a communication interface, configured to implement the method according to any one of the first aspect to the fifth aspect. In a possible implementation, the chip system further includes: a memory, configured to store a computer program. The chip system may include a chip, or may include a chip and another discrete device.

According to a tenth aspect, an embodiment of this application provides a communication system. The communication system includes a first network device and a second network device. The first network device is configured to perform the method performed by the first network device in the second aspect, and the second network device may be configured to perform the method performed by the second network device in the third aspect. Certainly, the communication system may further include a terminal device, and the terminal device may be configured to perform the method performed by the terminal device in the first aspect. It may be understood that the communication system may include more terminal devices or more network devices.

According to an eleventh aspect, an embodiment of this application provides a communication system. The communication system includes a first network device and a terminal device. The terminal device may be configured to perform the method performed by the terminal device in the fourth aspect, and the first network device is configured to perform the method performed by the first network device in the fifth aspect. Certainly, the communication system may further include a second network device. It may be understood that the communication system may include more terminal devices or more network devices.

According to a twelfth aspect, this application provides a computer-readable storage medium. The computer-readable storage medium stores a computer program. When the computer program is run, the method in any one of the first aspect to the fifth aspect is implemented.

According to a thirteenth aspect, a computer program product is provided. The computer program product includes computer program code. When the computer program code is run, the method in any one of the first aspect to the fifth aspect is performed.

For beneficial effects of the sixth aspect to the thirteenth aspect and the implementations of the sixth aspect to the thirteenth aspect, refer to descriptions of beneficial effects of the first aspect to the fifth aspect and the implementations of the first aspect to the fifth aspect.

### BRIEF DESCRIPTION OF DRAWINGS

FIG. 1 is a diagram of an architecture of a non-terrestrial network (non-terrestrial network, NTN) (transparent mode) according to an embodiment of this application;
FIG. 2 is a diagram of an architecture of an NTN network (a regenerative mode) according to an embodiment of this application;
FIG. 3 is a diagram of an architecture of an NTN network (with an ISL) according to an embodiment of this application;
FIG. 4 is a diagram of an architecture of an NTN network (a network device includes a DU and a CU) according to an embodiment of this application;
FIG. 5 is a diagram in which a terminal device is handed over between satellites according to an embodiment of this application;
FIG. 6 is a diagram in which a beam on which a terminal device is located changes because a satellite connected to the terminal device changes according to an embodiment of this application;
FIG. 7 is a schematic flowchart of a 1^{st} access method according to an embodiment of this application;
FIG. 8 is a schematic flowchart of a 2^{nd} access method according to an embodiment of this application;
FIG. 9 is a schematic flowchart of a 3^{rd} access method according to an embodiment of this application;
FIG. 10 is a diagram of a structure of a communication apparatus according to an embodiment of this application; and
FIG. 11 is a diagram of another structure of a communication apparatus according to an embodiment of this application.

### DESCRIPTION OF EMBODIMENTS

Technical solutions provided in embodiments of this application may be applied to a long term evolution (long term evolution, LTE) system, a 5th generation (5th generation, 5G) mobile communication technology system, an NTN system, vehicle-to-everything (vehicle-to-everything, V2X), internet of vehicles, machine type communication (machine type communication, MTC), internet of things (internet of things, IoT), machine-to-machine (machine-to-machine, M2M), or a future mobile communication system.

In a possible application scenario, the NTN system may include a satellite system. Based on satellite altitudes, namely, satellite orbital heights, a satellite may be classified into a highly elliptical orbit (highly elliptical orbit, HEO) satellite, a geostationary earth orbit (geostationary earth orbit, GEO) satellite, a medium earth orbit (medium earth orbit, MEO) satellite, and a low earth orbit (low earth orbit, LEO) satellite. In addition, the NTN system may further include an air network device, for example, a high altitude platform station (high altitude platform station, HAPS) communication system. The air network device in this application is not limited to the foregoing examples.

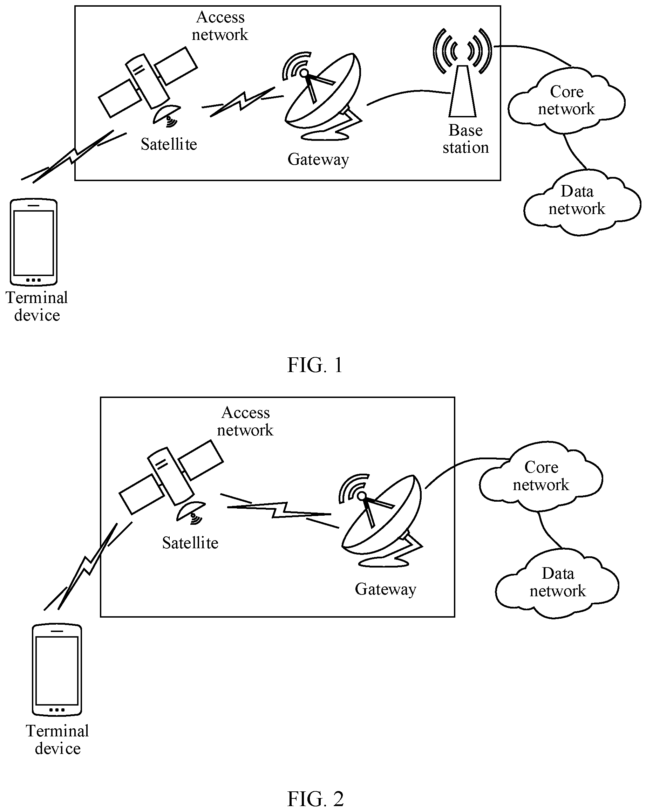

In an example, FIG. 1 is a diagram of an architecture of an NTN network. The NTN network includes a non-terrestrial network device, a gateway, a terrestrial base station, a terrestrial core network, and a terminal device. The non-terrestrial network device may be a satellite, for example, may be an HEO satellite, a GEO satellite, an MEO satellite, or an LEO satellite. The non-terrestrial network device may alternatively be an HAPS. This is not limited herein. In this application, an example in which the non-terrestrial network device is the satellite is used for description. However, in this application, the satellite may alternatively be replaced with another non-terrestrial network device (for example, the HAPS). The gateway (or referred to as a terrestrial station, an earth station, a signal gateway station, or a gateway station) (gateway) may be configured to connect the satellite and the base station. One or more satellites may be connected to one or more terrestrial base stations via one or more gateways. This is not limited herein. In FIG. 1, a communication mode of the satellite is a transparent (transparent) mode. To be specific, the satellite, as an analog radio frequency repeater, implements radio frequency conversion and amplification, and may transparently transmit or replicate a signal between the base station and the terminal. For example, the signal sent by the terminal device may be transparently transmitted via the satellite and forwarded via the gateway, to enter the terrestrial base station.

The communication mode of the satellite is not limited in this embodiment of this application. For example, the communication mode of the satellite may alternatively be a regenerative (regenerative) mode. FIG. 2 is a diagram of another architecture of an NTN network. In FIG. 2, a communication mode of a satellite is a regenerative mode. To be specific, the satellite may be used as a base station for wireless communication, to regenerate signals received from the ground, and may understand and process these signals. For example, the satellite may be a base station carried on an artificial earth satellite or a high-altitude aircraft. A gateway may forward signaling between the satellite (namely, the base station) and a core network.

It needs to be noted that FIG. 2 shows only one satellite and one gateway. In actual use, an architecture including a plurality of satellites and/or a plurality of gateways may be used based on a requirement. Each satellite may provide a service for one or more terminal devices, each gateway may correspond to one or more satellites, and each satellite may correspond to one or more gateways. This is not specifically limited in this embodiment of this application.

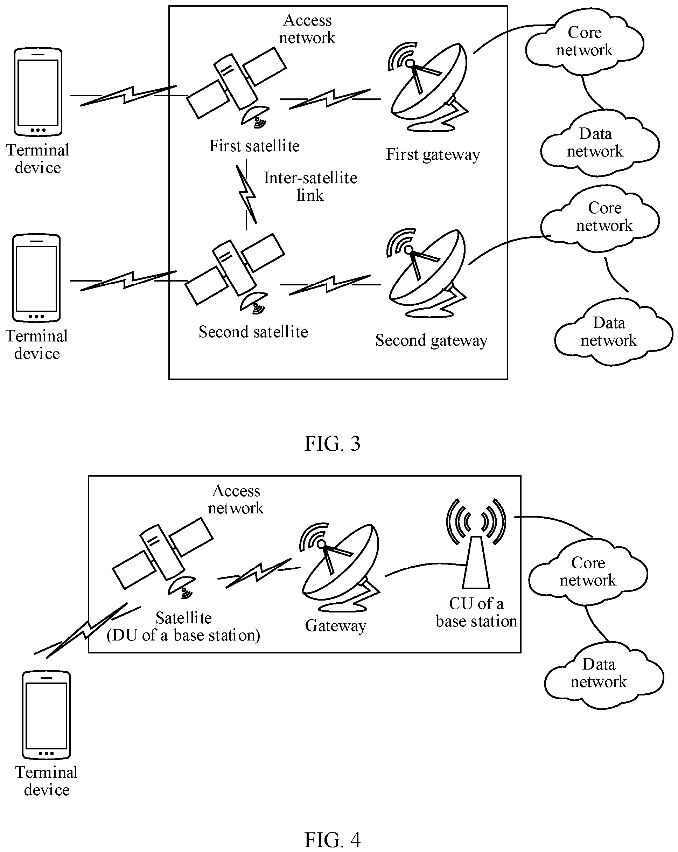

In an example, FIG. 3 is a diagram of another architecture of an NTN network. In FIG. 3, an example in which two satellites (a first satellite and a second satellite) and two gateways (a first gateway and a second gateway) are included is used. A communication mode of the two satellites is a regenerative mode. That is, the two satellites may be used as base stations for wireless communication. A difference from FIG. 2 is that an inter-satellite link (inter-satellite link, ISL) exists between the two satellites. In this network architecture, different satellites may communicate with each other, or may be connected to a same terrestrial core network.

In an example, the satellite may alternatively be used as a distributed unit (distributed unit, DU) of the base station, and is separated from a central unit (central unit, CU) of a terrestrial base station, and a CU-DU distributed architecture is formed. For example, FIG. 4 is a diagram of another architecture of an NTN network. A difference between FIG. 4 and FIG. 1 lies in that, a satellite, as a DU of a base station, may understand, process, and regenerate signals from the ground, and not only transparently transmits or replicates the signals, but a terrestrial base station is only used as a CU. In this network architecture, an NR-Uu radio interface signal may be transmitted over a service link between a terminal device and the satellite, a satellite radio interface (satellite radio interface, SRI) signal is transmitted over a feeder link between the satellite and a gateway, and an F1 interface signal between the DU and the CU is transmitted by using the SRI signal.

In embodiments of this application, a network device includes a non-terrestrial network device, for example, a satellite, or an access network (access network, AN) device on the ground, for example, a base station. The network device is an access device used by the terminal device to access a mobile communication system in a wireless manner. The network device may alternatively be a device that communicates with the terminal device through an air interface. The access network device in this application may include an evolved NodeB (evolved NodeB, eNB, or e-NodeB) in an LTE system or a long term evolution-advanced (long term evolution-advanced, LTE-A) system; or a next generation NodeB (next generation NodeB, gNB) in a 5G system, an access node in a wireless fidelity (wireless fidelity, Wi-Fi) system, or the like. Alternatively, the network device may be a relay station, an in-vehicle device, a future evolved public land mobile network (Public Land Mobile Network, PLMN) device, a device in an M2M network, a device in an IoT network, an unmanned aerial vehicle device, or the like. An access network device in a V2X system may be a road side unit (road side unit, RSU). A specific technology and a specific device form used by the network device are not limited in embodiments of this application.

In addition, the base station in embodiments of this application may include a CU and a DU, and a plurality of DUs may be controlled by one CU in a centralized manner. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a media access control (media access control, MAC) layer, are set on the DU. It needs to be noted that such protocol layer division is merely an example, and there may be division of other protocol layers. A radio frequency apparatus may be remotely deployed and not placed in the DU, may be integrated into the DU, or may be partially remotely disposed and partially integrated into the DU. This is not limited in embodiments of this application. In addition, in some embodiments, a control plane (control plane, CP)-user plane (user plane, UP) of the CU may alternatively be separated into different entities for implementation, where the entities are respectively a control-plane CU entity (CU-CP entity) and a user-plane CU entity (CU-UP entity). The control plane CU-CP of the CU may be further divided into a CU-CP 1 and a CU-CP 2. The CU-CP 1 includes various radio resource management functions, and the CU-CP 2 includes an RRC function and a PDCP-C function (that is, a basic function of control plane signaling at the PDCP layer). In this network architecture, signaling generated by the CU may be sent to the terminal device via the DU, or signaling generated by the terminal device may be sent to the CU via the DU. The DU may transparently transmit the signaling to the terminal device or the CU by directly encapsulating the signaling at the protocol layer without parsing the signaling.

An example in which the network device is the base station is used. The base station may communicate with the terminal device, or may communicate with the terminal device via the relay station. The terminal device may communicate with a plurality of base stations in different access technologies. An example in which the network device is the satellite is used. The satellite may be connected to the base station via the gateway. If a communication mode of the satellite is a transparent mode, a signal sent by the terminal device may be transparently transmitted via the satellite and forwarded via the gateway, to enter the terrestrial base station. If a communication mode of the satellite is a regenerative mode, the satellite may be used as a base station, to process a signal sent by the terminal device.

In embodiments of this application, the terminal device is a device with a wireless transceiver function, and may send a signal to the network device, or receive a signal from the network device. The terminal device may include user equipment (user equipment, UE), and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example, but not limited to the following scenarios: cellular communication, D2D, V2X, machine-to-machine/machine-type communication (machine-to-machine/machine-type communication, M2M/MTC), IoT, virtual reality (virtual reality, VR), augmented reality (augmented reality, AR), industrial control (industrial control), self-driving (self-driving), telemedicine (remote medical), a smart grid (smart grid), smart furniture, a smart office, and terminal devices in scenarios such as a smart wearable, smart transportation, a smart city (smart city), an uncrewed aerial vehicle, and a robot. For example, the terminal device may be a mobile phone (mobile phone), a tablet computer (tablet computer), a computer with the wireless transceiver function, a VR terminal, an AR terminal, or the like. By way of example, and not limitation, in embodiments of this application, the terminal device may be alternatively a wearable device. If the various terminal devices described above are located in a vehicle (for example, placed in the vehicle or installed in the vehicle), the terminal devices may be all considered as in-vehicle terminal devices. The in-vehicle terminal device is also referred to as an on-board unit (on-board unit, OBU). Alternatively, the terminal device in this application may be an in-vehicle module, an in-vehicle assembly, an in-vehicle component, an in-vehicle chip, or an in-vehicle unit that is built in a vehicle as one or more components or units. The vehicle may implement the methods in this application by using the built-in terminal device.

In embodiments of this application, a communication apparatus configured to implement a function of the network device or the terminal device may be the network device or the terminal device itself, or may be an apparatus, for example, a chip system, that can support the network device or the terminal device in implementing this function. The apparatus may be mounted in the network device or the terminal device. In the technical solutions provided in embodiments of this application, an example in which the apparatus configured to implement the function of the network device is the network device, and the apparatus configured to implement the function of the terminal device is the terminal device is used, to describe the technical solutions provided in embodiments of this application.

In embodiments of this application, unless otherwise specified, a quantity of nouns represents "a singular noun or plural nouns", namely, "one or more". "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. For example, A/B indicates A or B. "At least one of the following items (pieces)" or a similar expression thereof indicates any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, a first network device and a second network device may be a same network device, or may be different network devices. In addition, this name does not indicate that priorities, importance, or the like of the two network devices are different.

The foregoing briefly describes the communication systems to which embodiments of this application are applicable. The following describes related technical solutions in embodiments of this application.

A satellite communication scenario is used as an example, for example, a scenario shown in any one of FIG. 1 to FIG. 4. A satellite (referred to as a source satellite in this specification) serving a terminal device may stop serving the terminal device due to movement, and the terminal device is handed over from the source satellite to another satellite (referred to as a target satellite in this specification), to access a base station (referred to as a target base station in this specification) connected to the target satellite. The target base station and a base station (referred to as a source base station in this specification) connected to the source satellite may be a same base station, or may be different base stations. There may be a plurality of terminal devices served by the source satellite, and the plurality of terminal devices may simultaneously access the target satellite, to access the target base station. If the plurality of terminal devices simultaneously access the target satellite in a contention manner, a success rate of accessing the target base station by each terminal device is low, and an additional access delay is caused. If the plurality of terminal devices simultaneously access a network in a non-contention manner, the target base station needs to allocate, to the terminal devices, resources used for accessing the target base station. Because there are a large quantity of terminal devices, the target base station needs to allocate a large quantity of resources. That is, large resource consumption is caused.

Similarly, in a non-satellite communication scenario, there may alternatively be a plurality of terminal devices served by the source base station. When the source base station stops a service, the plurality of terminal devices connected to the source base station are also handed over from the source base station to the target base station. In this case, a success rate of accessing the target base station by each terminal device is also low, or resource overheads for accessing the target base station are also large.

It may be understood that, that the satellite (or the base station) stops the service means that the satellite (or the base station) stops or interrupts the service for the terminal device in a corresponding cell. For example, when the satellite connected to the base station is handed over between gateways, a connection to the terminal device is disconnected. For another example, a cell covered by the satellite connected to the base station reaches service stop time. The service stop time is indicated by using an information element "t-service" in a broadcast message. "t-service" indicates time information used when an NTN quasi-earth fixed cell is to stop serving current coverage.

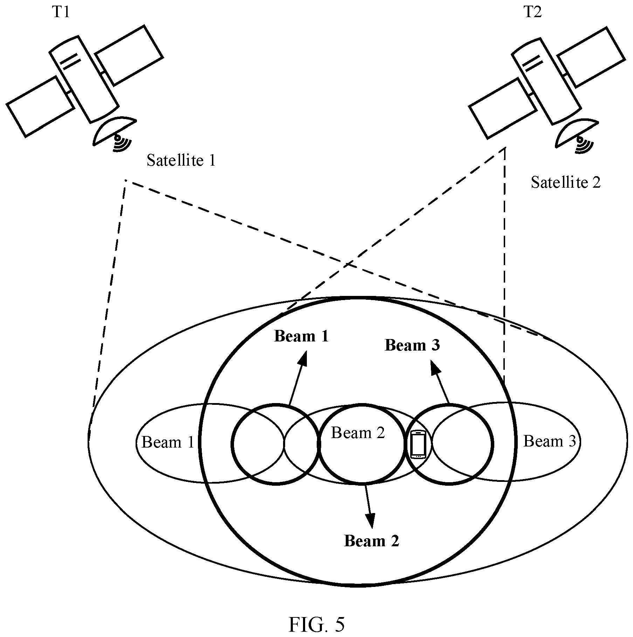

In addition, when the terminal device is handed over from one satellite to another satellite, a beam on which the terminal device is located may change. For example, FIG. 5 shows a scenario in which a satellite connected to a terminal device changes. The terminal device is handed over from a satellite 1 to a satellite 2. Beams of the satellite 1 include a beam 1, a beam 2, and a beam 3, and are shown by using ellipses (shown by using thin lines) in FIG. 5. Beams of the satellite 2 include a beam 1, a beam 2, and a beam 3, and are shown by using circles (shown by using thick lines) in FIG. 5. It can be learned from FIG. 5 that when the terminal device is connected to the satellite 1, a beam on which the terminal device is located is the beam 2. When the terminal device is connected to the satellite 2, a beam on which the terminal device is located is the beam 3. That is, when the satellite connected to the terminal device changes, a beam covering the terminal device may also change.

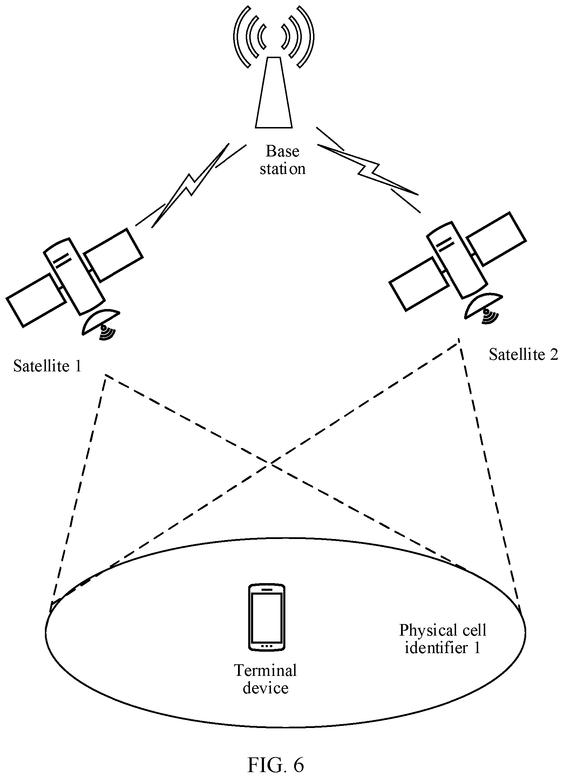

However, in a possible scenario, the terminal device may not determine an accurate beam. For example, the satellite connected to the terminal device changes, but a base station connected to the terminal device is unchanged. In this case, the terminal device considers that a beam configuration is unchanged. FIG. 6 is a diagram in which a terminal device is handed over between satellites. In FIG. 6, an example in which the terminal device is handed over from a satellite 1 to a satellite 2 is used. The satellite 1 and the satellite 2 are connected to a same base station, the satellite 1 corresponds to a cell 1 managed by the base station, the satellite 2 corresponds to a cell 2 managed by the base station, and the cell 1 and the cell 2 have a same physical cell identifier (physical cell identifier, PCI), that is, both are a PCI 1. In this case, even if the terminal device is handed over from the cell 1 (namely, a source cell) to the cell 2 (namely, a target cell), it may be considered that the cell in which the terminal device is located is unchanged, in other words, the source cell and the target cell with the same PCI can be considered as a same cell. Therefore, the base station does not send a cell handover command to the terminal device. Therefore, a cell handover procedure is not triggered, and a beam is not reconfigured for the terminal device either in a network. The cell handover command may be an RRC reconfiguration message that carries an indication indicating a cell that the terminal device accesses. It needs to be noted that in this application, the cells with the same PCI may be considered as the same cell.

Usually, during the access to the network or in a process of accessing the network, the terminal device measures a reference signal sent in a beam form, for example, a synchronization signal and physical broadcast channel block (synchronization signal and PBCH block, SSB), a channel state information reference signal (channel state information reference signal, CSI-RS), or another possible reference signal, to determine radio link quality or determine whether a beam failure exists. In this scenario shown in FIG. 5 or FIG. 6, if the terminal device still uses an original beam configuration or reference signal configuration, the terminal device may not detect (or receive) the reference signal. Consequently, an incorrect radio link detection result is caused, and determining of a radio link failure is affected. Similarly, if the terminal device still uses the original beam configuration or reference signal configuration, an incorrect beam failure detection result may also be caused, and beam recovery is affected.

In this embodiment of this application, a source network device may indicate an access rule to the terminal device. For example, the terminal device initiates access to a target cell of a target network device only after receiving an access indication from the target network device. For different terminal devices, the target network device may send the access indication on different occasions or indicated time-frequency resources for accessing the network are different. In this case, the different terminal devices initiate access to the target cell of the target network device at different time or on the different time-frequency resources. Therefore, a quantity of terminal devices that access the network within same time can be reduced, success rates of accessing the network by the terminal devices can be improved, or resource overheads for accessing the network can be reduced. In addition, the source network device and/or the target network device may provide, for the terminal device, the reference signal corresponding to the target cell, to avoid an incorrect radio link detection result caused when the terminal device performs radio link detection based on an originally configured reference signal because a beam on which the terminal device is located changes. This affects the determining of the radio link failure. Similarly, it can be avoided that the incorrect beam failure detection result is caused and beam recovery is affected because the terminal device performs beam failure detection based on the originally configured reference signal.

The following describes the technical solutions provided in embodiments of this application with reference to the accompanying drawings.

An embodiment of this application provides an access method. The method may be applied to a satellite (or base station) handover scenario. For example, the method may be applied to a scenario in which a satellite of a quasi-earth fixed cell (quasi-earth fixed cell) reaches service stop time and a terminal device is handed over between satellites. For another example, the method may be applied to a scenario in which a satellite of an earth moving cell (earth moving cell) is handed over between terrestrial gateways. An example in which the terminal device is handed over from a first network device to a second network device is used. In the satellite handover scenario, the first network device may be a first satellite, and the second network device may be a second satellite. A base station connected to the first satellite is a source base station, and a base station connected to the second satellite is a target base station. In the base station handover scenario, the first network device is a source base station, and the second network device is a target base station. For example, for the architecture of the NTN network in FIG. 1, the first network device and the second network device are terrestrial base stations. For the architectures of the NTN networks in FIG. 2 and FIG. 3, the first network device and the second network device are satellites, that is, the satellites have a base station function. For the architecture of the NTN network in FIG. 4, the first network device or the second network device may be a satellite, or may be a terrestrial base station.

The first network device and the second network device may be a same network device, or may be different network devices. The first satellite and the second satellite may be two different satellites, or may be a same satellite.

When the first network device and the second network device are the same network device, and the first satellite and the second satellite are the two different satellites, the terminal device is handed over from the first satellite to the second satellite, and the network device connected to the terminal device remains unchanged. In this case, the communication method may be applied to a scenario in which the first network device does not send or does not need to send a handover command and a cell configured for the terminal device is unchanged. Certainly, in this case, the communication method may alternatively be applied to a scenario in which the first network device sends a handover command or a cell configured for the terminal device changes.

When the first network device and the second network device are the different network devices, and the first satellite and the second satellite are the two different satellites, the terminal device is handed over from the first network device to the second network device, and the network device connected to the terminal device changes. In this case, the communication method may be applied to the scenario in which the first network device sends the handover command and the cell configured for the terminal device changes, or may be applied to the scenario in which the first network device does not send or does not need to send the handover command or the cell configured for the terminal device is unchanged.

In addition, when the first network device and the second network device are the different network devices, and the first satellite and the second satellite are the same satellite, the terminal device is handed over from the first network device to the second network device. Alternatively, the first network device and the second network device are the same network device, and the first satellite and the second satellite are the same satellite, but a gateway connected to the first satellite or the second satellite changes. In the two cases, the communication method may be applied to the scenario in which the first network device does not send or does not need to send the handover command or the cell configured for the terminal device is unchanged. For example, the communication method may be applied to the scenario in FIG. 1. Due to movement of a satellite, a gateway connected to the satellite needs to change. In this case, a cell corresponding to the satellite also needs to change.

In this embodiment of this application, initiating the access includes initiating a random access process, or the terminal does not need to initiate the random access process, but only sends information, so that the target network device learns that the terminal device has accessed a cell managed by the network device. For example, the terminal device sends a physical uplink control channel (physical uplink control channel, PUCCH) or a physical uplink shared channel (physical uplink shared channel, PUSCH) to the target network device, to notify the network device that the terminal device has accessed the corresponding cell managed by the network device.

In this embodiment of this application, that the terminal device is handed over from the first network device to the second network device may also be understood as that the terminal device is handed over from the source cell to the target cell. If the first network device and the second network device are base stations, the first network device manages the source cell, and the second network device manages the target cell. If the first network device and the second network device are satellites, the first satellite corresponds to the source cell, and the second satellite corresponds to the target cell.

Unless otherwise specified, "if" and "assuming that" in embodiments of this application may be replaced, and unless otherwise specified, "when" and "in a case in which" may be replaced. Steps shown by using dashed lines in the accompanying drawings are optional steps, that is, the steps are not necessarily performed. In this specification, "access the network", "access the target network device", "access the target base station", and "access the target cell" belong to a same concept, and may be replaced with each other unless otherwise specified. "The cell configured by the second network device is unchanged" and "the PCI configured by the second network device is unchanged" belong to a same concept, and may be replaced with each other unless otherwise specified. "The cell configured by the second network device changes" and "the PCI configured by the second network device changes" belong to a same concept, and may be replaced with each other unless otherwise specified.

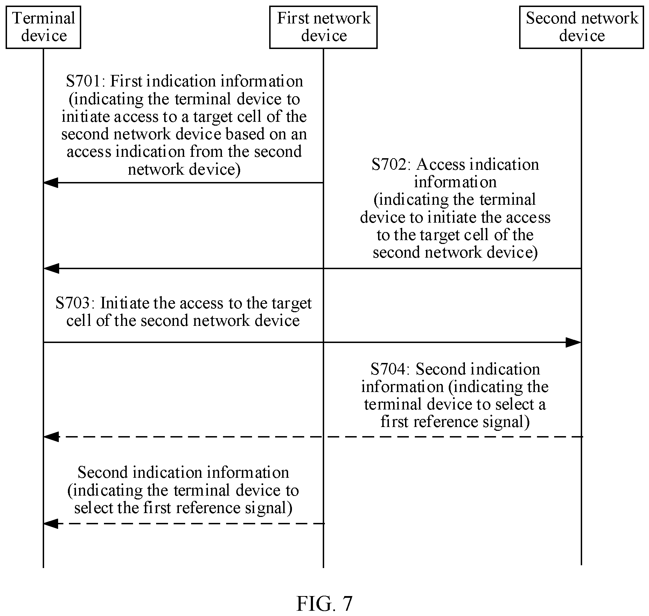

FIG. 7 is a schematic flowchart of a communication method according to an embodiment of this application.

In the following descriptions, an example in which the communication method is performed by using a first network device, a second network device, and a terminal device is used. In a non-NTN scenario (namely, a terrestrial network scenario), the first network device may be a source base station in a terrestrial network, and the second network device may be a target base station in the terrestrial network. In an NTN scenario, the first network device may be a source base station connected to a first satellite, and the second network device may be a target base station connected to a second satellite. For example, refer to the architecture of the NTN network in FIG. 1. Alternatively, the first network device may be a first satellite with a base station function, and the second network device may be a second satellite with the base station function. Refer to the architectures of the NTN networks in FIG. 2, FIG. 3, and FIG. 4.

S701: The first network device sends first indication information to at least one terminal device. Correspondingly, the at least one terminal device receives the first indication information from the first network device.

The first indication information indicates the terminal device to initiate access to a target cell of the second network device based on access indication information from the second network device. That the first network device sends first indication information to the terminal device may also be understood as that the first network device indicates the terminal device to initiate the access, which is scheduled by the second network device. The first network device may separately send the first indication information to one or more terminal devices. Correspondingly, after receiving the access indication information from the second network device, the one or more terminal devices initiate the access to the target cell of the second network device. For a terminal device, it may also be understood that the first network device provides, for the terminal device, a rule for accessing a network. That is, when determining to initiate the access, the terminal device does not immediately initiate the access to the target cell of the second network device, but waits for the access indication information from the second network device, and then the terminal device initiates the access to the target cell of the second network device. For example, after disconnecting a connection to the first network device, the terminal device does not immediately initiate the access to the target cell of the second network device, but waits for the access indication information from the second network device, and then the terminal device initiates the access to the target cell of the second network device.

Considering a case of a large quantity of terminal devices, access indication information sent by the second network device is limited in a period of time. Consequently, one or more terminal devices may not receive the access indication information from the second network device. Therefore, the one or more terminal devices do not initiate access, and do not access the network either. Therefore, in this embodiment of this application, the first network device may indicate the terminal device to receive the access indication information from the second network device within a first duration. For example, the first network device may further indicate the first duration to the one or more terminal devices. For any one terminal device, if the terminal device does not receive the access indication information from the second network device within the first duration, the terminal device may alternatively initiate access to the target cell after the first duration. Therefore, it is avoided as much as possible that the terminal device cannot access the network because the terminal device cannot receive the access indication information. Optionally, different terminal devices correspond to different first durations, to minimize a quantity of terminal devices that contend for accessing the network within same time. Alternatively, terminal devices in different groups correspond to different first durations, and terminal devices in a same group correspond to a same first duration, to minimize a delay of accessing the network by each terminal device.

The first indication information and the first duration may be carried in same signaling, or may be carried in different pieces of signaling. For example, the first indication information and the first duration may be included in access rule information, and the first network device may separately send the access rule information to the one or more terminal devices. Optionally, access rule information received by the different terminal devices includes different first durations. If the first network device multicasts the access rule information, the access rule information received by the terminal devices in the different groups may include different first durations. It needs to be noted that a specific name of the access rule information is not limited in this embodiment of this application.

For another example, the first network device may broadcast or multicast the first indication information, and multicast the first duration. The terminal devices in the different groups obtain the different first durations. Alternatively, the first network device may broadcast or multicast the first indication information. In addition, the first network device separately sends the first duration to the different terminal devices, and the different terminal devices may obtain the different first durations.

It may be understood that if the terminal device is not disconnected from the first network device, the terminal device does not need to initiate the access. Therefore, the terminal device may receive the access indication information from the second network device within the first duration after disconnecting the connection to the first network device. It may also be understood that start time of the first duration is time at which the terminal device disconnects the connection to the first network device. Before the terminal device disconnects the connection to the first network device, if the terminal device receives the access indication information, the terminal device may ignore or discard the access indication information, or the terminal device may parse the access indication information, but does not initiate the access to the target cell of the second network device based on the access indication information. This can avoid that the terminal device frequently initiates the unnecessary access.

Optionally, that the terminal device disconnects the connection to the first network device includes the following several disconnections: The terminal device disconnects the connection to the first network device via the first satellite; the terminal device disconnects the connection to the first network device after learning that the first network device is to stop providing the service for the terminal device, where for example, the terminal device disconnects the connection to the first network device after a moment that is broadcast by the first network device and at which the first network device stops providing the service for the terminal device; or the terminal device disconnects the connection to the first network device after receiving a handover command from the first network device. Optionally, after the terminal device disconnects the connection to the first network device and before the terminal device accesses the second network device, the terminal device does not trigger a radio link failure because signal quality of the first network device deteriorates.

If the first network device and the second network device correspond to different cells, that is, a cell configured by the second network device changes, the terminal device does not know the cell managed by the second network device, or the terminal device does not know the cell in which the access indication information sent by the second network device is received. If still receiving, in the source cell, the access indication information sent by the second network device, it is clear that the terminal device cannot receive the access indication information. Therefore, the first network device may provide, for the terminal device, the target cell managed by the second network device, so that the terminal device receives the access indication information from the second network device in the target cell, and therefore the terminal device can receive the access indication information from the second network device. For example, the first network device may send cell information to the terminal device, where the cell information indicates the target cell. The terminal device receives the cell information, and receives the access indication information in the target cell. The cell information may be sent to the terminal device together with the first indication information and/or the first duration. For example, the access rule information may include the first indication information, the first duration, and the cell information. Certainly, the first network device may alternatively separately send the cell information to the terminal device. That is, the cell information and the first indication information (or the first duration) are respectively carried in different pieces of signaling. Optionally, after the first network device provides, for the terminal device, the target cell managed by the second network device, the terminal device performs downlink synchronization with the target cell.

It needs to be noted that if the first network device and the second network device are a same network device, and the two satellites connected to the network device correspond to a same cell, that is, the cell configured by the second network device does not change, the terminal device knows that the cell in which the access indication information can be received includes the source cell. In this case, the first network device does not need to provide the target cell for the terminal device, that is, the first network device does not need to send the cell information to the terminal device. Certainly, even if the cell configured by the second network device does not change, the first network device may also provide the target cell for the terminal device. Optionally, the terminal device performs downlink synchronization with the source cell (namely, the target cell) again.

The access rule information may be sent by the first network device to the terminal device before the first network device stops the service, that is, the first network device may send the access rule information to the terminal device before stopping the service. This embodiment of this application imposes no limitation on an interval at which the first network device sends the access rule information after the first network device stops the service. In addition, signaling that carries the access rule information is not limited in this embodiment of this application. For example, the access rule information may be carried in one or more of a media access control control element (media access control control element, MAC CE), a physical downlink control channel (physical downlink control channel, PDCCH), a public (common) RRC message, or a dedicated RRC message. The public RRC message may include a system message, for example, a system information block (system information block, SIB). The dedicated RRC message may include a cell handover message. For example, the dedicated RRC message is a CHO configuration message in an RRC reconfiguration message, or the dedicated RRC message is an HO configuration message in the RRC reconfiguration message. It needs to be noted that the access rule information may include the first indication information, or the access rule information includes the first indication information and the first duration, or the access rule information includes the first indication information and the cell information. Alternatively, the access rule information includes the first indication information, the first duration, and the cell information.

Optionally, when the first network device uses a CU-DU split architecture, the first network device sends the access rule information to the terminal device in the following two manners.

Manner 1: A CU generates the access rule information, and sends the access rule information to the terminal device via a DU. For example, the access rule information is carried in the public RRC message or the dedicated RRC message. The DU may forward, to the terminal device, the access rule information received from the CU; or may modify the access rule information received from the CU, and then send the modified access rule information to the terminal device.

Manner 2: A CU sends indication information to a DU, where the indication information indicates the DU to generate the access rule information and send the access rule information to the terminal device. In this manner, the indication information may be carried in terminal device-level signaling or UE-level signaling, or may be carried in cell-level signaling. That is, the indication information takes effect for all terminal devices in the cell. The DU receives the indication information, and sends the access rule information to the terminal device. The access rule information may be carried in the MAC CE or the PDCCH.

Optionally, if the CU is in a CU-CP and CU-UP split architecture, and a CU-CP is further split into two parts, for example, the CU-CP is split into a CU-CP 1 and a CU-CP 2, the CU in Manner 1 and Manner 2 may be the CU-CP 2. That is, the CU-CP 2 generates the access rule information, and sends the access rule information to the terminal device via the DU. The access rule information is carried in the public RRC message or the dedicated RRC message. Alternatively, the CU-CP 2 sends the indication information to the DU, where the indication information indicates the DU to generate the access rule information and send the access rule information to the terminal device, and the access rule information may be carried in the MAC CE or the PDCCH.

S702: The second network device sends the access indication information to the at least one terminal device. Correspondingly, the at least one terminal device receives the access indication information from the second network device.

The access indication information may indicate the terminal device to initiate the access to the target cell of the second network device. Any one terminal device may send access to the target cell of the second network device after receiving the access indication information. In this embodiment of this application, the second network device may schedule the terminal device to access the target cell of the second network device. For example, when determining that a small quantity of terminal devices need to access the second network device within specific time, the second network device schedules the one or more terminal devices to access the target cell, thereby improving a success rate of accessing the second network device by each terminal device.

In a possible implementation, the second network device may send the access indication information to the different terminal devices at different time. In this case, the different terminal devices receive the access indication information on different occasions, and initiate the access to the target cell at the different time. Therefore, a quantity of terminal devices that simultaneously access the second network device is reduced, thereby improving a success rate of accessing the second network device by each terminal device. In addition, if the terminal device accesses the second network device in a contention manner, because a small quantity of terminal devices simultaneously access the second network device, a small quantity of resources need to be allocated by the second network device, so that resource overheads can be reduced.

Alternatively, the second network device separately sends, to a plurality of terminal devices on different sending occasions, the access indication information indicating time-frequency resources used by the plurality of terminal devices to initiate access, where different time-frequency resources are configured for the plurality of terminal devices. That is, the access indication information received by the different terminal devices indicates the different time-frequency resources. Because the different terminal devices receive the access indication information on the different occasions, the different terminal devices initiate the access to the target cell at the different time by using the different time-frequency resources. This can reduce a quantity of terminal devices that simultaneously contend for accessing the second network device by using same resources, thereby improving a success rate of accessing the network by each terminal device.

Optionally, access indication information corresponding to the terminal devices in the different groups is sent on different occasions, and the access indication information corresponding to the terminal devices in the same group may be sent on a same occasion, to minimize a delay of accessing the network by each terminal device. Similarly, the access indication information corresponding to the terminal devices in the different groups indicates the different time-frequency resources, and the access indication information corresponding to the terminal devices in the same group may indicate same time-frequency resources.

Before accessing the target cell, the terminal device needs to determine an access occasion based on an SSB of the target cell. If the target cell and the source cell have a same PCI, and the second network device does not send a handover command to the terminal device, the second network device does not reconfigure an SSB for the terminal device through a handover procedure. In this case, if the terminal device still detects the SSB based on an original SSB configuration, the detected SSB may not be the SSB corresponding to the second network device. An access occasion determined by the terminal device based on the SSB selected based on the original SSB configuration may also be inappropriate. This leads to a plurality of access failures. Therefore, in this embodiment of this application, the second network device may further provide, for the found terminal device, a reference signal used to determine the access occasion. For ease of description, the reference signal is referred to as a second reference signal.

For example, the access indication information includes third indication information, the third indication information indicates the second reference signal, and the second reference signal is used to determine the access occasion. The second reference signal may be the SSB, and the third indication information may include an index of the SSB. The terminal device may select the appropriate SSB based on the index of the SSB, to determine the access occasion. In this way, the plurality of access failures caused by the inappropriate access occasion determined by the terminal device based on the selected SSB can be avoided. It may be understood that the second reference signal may be used to determine the occasion for initiating random access to the target cell. In this case, the second reference signal corresponds to the target cell, that is, the second reference signal belongs to at least one reference signal corresponding to the target cell. Therefore, the terminal device may perform radio link detection and/or beam failure detection by using the second reference signal. That is, the second reference signal may be used for the radio link detection and/or the beam failure detection. It may also be considered that the third indication information may further indicate the terminal device to select a reference signal used for the radio link detection and/or the beam failure detection. For the terminal device, if the access indication information includes the third indication information, in addition to determining, based on the second reference signal, the occasion for initiating the access, the terminal device may further perform radio link detection and/or beam failure detection based on the second reference signal. It needs to be noted that the second reference signal and the reference signal used for the radio link detection and/or the beam failure detection may be a same reference signal or different reference signals. For ease of description, in this embodiment of this application, the reference signal used for the radio link detection and/or the beam failure detection is referred to as a first reference signal, and is described below.

In a possible scenario, the first network device and the second network device may communicate with each other. In this case, the second network device may provide information about the second reference signal for the first network device. Alternatively, the first network device may obtain information about the second reference signal from the second network device. If the first network device knows the information about the second reference signal, the third indication information may alternatively be sent by the first network device to the terminal device. That is, the second network device sends the access indication information to the terminal device, and the first network device sends the third indication information to the terminal device.

Optionally, the access indication information includes fourth indication information, indicating a moment at which the terminal device initiates the access to the target cell of the second network device. For example, the fourth indication information includes a time interval, indicating the terminal device to initiate the access to the target cell of the second network device at the time interval after the terminal device receives the access indication information. The second network device may send different time intervals to the different terminal devices, so that the different terminal devices initiate the access to the target cell of the second network device at the different time.

Signaling that carries the access indication information is not limited in this embodiment of this application. For example, the access indication information may be carried in downlink control information (downlink control information, DCI) in the PDCCH, for example, trigger signaling dedicated to accessing the network, where the trigger signaling may be a PDCCH order (PDCCH order).

Optionally, when the first network device or the second network device uses the CU-DU split architecture, the DU generates the access indication information based on the indication information from the CU, and sends the access indication information to the terminal device. For example, the CU sends the indication information to the DU, and the indication information indicates the DU to send the access indication information to the terminal device. The DU receives the indication information from the CU, generates the access indication information, and sends the access indication information to the terminal device. The indication information sent by the CU to the DU may be carried in the UE-level signaling, or may be carried in the cell-level signaling. That is, the indication information takes effect for all the terminal devices in the cell. Alternatively, the DU may send the access indication information to the terminal device based on the indication information from the CU in Manner 2 in step 701. Optionally, if the CU is in a CU-CP and CU-UP split architecture, and a CU-CP is further split into two parts, for example, the CU-CP is split into a CU-CP 1 and a CU-CP 2, the CU-CP 2 may indicate the DU to send the access indication information to the terminal device, and the DU sends the access indication information to the terminal device based on the indication of the CU-CP 2. Alternatively, the DU may send the access indication information to the terminal device based on the indication information from the CU-CP 2 in Manner 2 in step 701. It may be understood that, after sending the access indication information, the second network device may send the third indication information to the terminal device, as shown in FIG. 7.

S703: The terminal device initiates the access to the target cell based on the access indication information.

The terminal device receives the access indication information from the second network device, and initiates the access to the target cell. Optionally, the terminal device initiates the access to the target cell of the second network device based on the access indication information after disconnecting the connection to the first network device. Correspondingly, the second network device may send the access indication information to the terminal device after the terminal device disconnects the connection to the first network device, to reduce unnecessary access indication information and reduce signaling overheads.

After initiates the access to the target cell, the terminal device may access the second network device via the second satellite. In this case, after accessing the second network device, the terminal device may delete some configurations of a MAC layer, and reserve the other configurations of the MAC layer. For example, the terminal device may clear an uplink time alignment timer (uplink time alignment timer), and/or cancel a beam failure detection timer. The terminal device may reserve a value of a new data indicator (new data indicator, NDI), and/or reserve content in a soft buffer (soft buffer) of all downlink hybrid automatic repeat request (hybrid automatic repeat request, HARQ) progresses (progresses). Compared with deleting all configurations of the MAC layer, this allows that subsequent access configurations may inherit some configurations of the MAC layer, thereby simplifying a configuration procedure of accessing the network, improving configuration continuity, and improving system performance. Optionally, when the cell configured by the second network device for the terminal device changes, the terminal device may delete all the configurations of the MAC layer. In addition, configurations of an RLC layer and a PDCP layer may remain unchanged.

Optionally, after accessing the second network device, the terminal device may further update a configuration of the reference signal for the radio link detection and/or the beam failure detection. For example, the terminal device notifies the MAC layer or a PHY layer of the update of the configuration of the reference signal via the RRC layer.

It may be understood that before initiating the access to the target cell, the terminal device may obtain ephemeris information of the second satellite. The ephemeris information of the second satellite may be sent by the second network device to the terminal device, or may be sent by the first network device to the terminal device via the first satellite. For example, after establishing a connection to the second satellite, the second network device may broadcast the ephemeris information of the second satellite. For example, the ephemeris information of the second satellite may be carried in a system message, for example, a SIB 19. For another example, the first network device may send, to the terminal device via the first satellite, an RRC message that carries the ephemeris information of the second satellite. The RRC message may be the RRC reconfiguration message, and the ephemeris information of the second satellite may be carried in the CHO configuration message or the HO configuration message in the RRC reconfiguration message.

Optionally, when the first network device or the second network device uses the CU-DU split architecture, the ephemeris information of the second satellite may be generated by the CU or the DU. For example, the DU generates the ephemeris information of the second satellite, and sends the ephemeris information of the second satellite to the terminal device. Alternatively, the DU generates the ephemeris information of the second satellite, and sends the ephemeris information of the second satellite to the CU, and the CU sends the ephemeris information of the second satellite to the terminal device by using the RRC message. Optionally, the CU receives the ephemeris information of the second satellite from the DU, and may perform a control capability based on the ephemeris information of the second satellite. For example, when determining that the terminal device is to be handed over, the CU sends the ephemeris information of the second satellite to the first network device. For another example, the CU generates the ephemeris information of the second satellite, and sends the ephemeris information of the second satellite to the terminal device via the DU. Alternatively, the CU generates the ephemeris information of the second satellite, and sends the ephemeris information of the second satellite to the DU, and the DU may send the ephemeris information of the second satellite to the terminal device. Optionally, the DU may modify the received ephemeris information of the second satellite, and send the modified ephemeris information of the second satellite to the terminal device. The CU further sends indication information to the DU, where the indication information may indicate that epoch time (epoch time) information corresponding to the ephemeris information of the second satellite is indicated in an explicit manner or an implicit manner. If the indication information indicates that the epoch time information corresponding to the ephemeris information of the second satellite is indicated in the implicit manner, the DU needs to decode the received epoch time information corresponding to the ephemeris information of the second satellite in the implicit manner, to obtain the epoch time information corresponding to the ephemeris information of the second satellite. If the indication information indicates that the epoch time information corresponding to the ephemeris information of the second satellite is indicated in the explicit manner, the DU needs to decode the received epoch time information corresponding to the ephemeris information of the second satellite in the explicit manner, to obtain the epoch time information corresponding to the ephemeris information of the second satellite. Therefore, the CU indicates, to the DU by using the indication information, that the epoch time information corresponding to the ephemeris information of the second satellite is indicated in the explicit manner or the implicit manner, so that it can be avoided that the DU performs unnecessary decoding, thereby simplifying a processing procedure of the DU, accelerating a processing speed of the DU, and improving system performance.

Optionally, if the CU is in a CU-CP and CU-UP split architecture, and a CU-CP is further split into two parts, for example, the CU-CP is split into a CU-CP 1 and a CU-CP 2, the ephemeris information that is of the second satellite and that is generated by the DU may be sent to the CU-CP2, and the CU-CP2 sends the ephemeris information of the second satellite to the terminal device via the DU by using the dedicated RRC message. Optionally, the CU-CP 2 sends the ephemeris information to the CU-CP 1, so that the CU-CP 1 can execute a control capability based on the ephemeris information.

Alternatively, the CU-CP 1 generates the ephemeris information of the second satellite, and sends the ephemeris information of the second satellite to the CU-CP 2, and the CU-CP 2 sends the ephemeris information of the second satellite to the DU. The DU modifies the received ephemeris information of the second satellite, and sends the modified ephemeris information of the second satellite to the terminal device. The CU-CP 2 further sends indication information to the DU, where the indication information may indicate that the epoch time information corresponding to the ephemeris information of the second satellite is indicated in an explicit manner or an implicit manner.

Alternatively, the CU-CP 1 generates the ephemeris information of the second satellite, and sends the ephemeris information of the second satellite to the CU-CP 2, and the CU-CP 2 forwards the ephemeris information of the second satellite to the terminal device via the DU by using the dedicated RRC message.

If the target cell and the source cell have a same PCI, and the second network device does not send the handover command to the terminal device, the second network device does not reconfigure, for the terminal device through the handover procedure, a reference signal, for example, an SSB or a CSI-RS. An example in which the reference signal is the SSB is used. In this case, if the terminal device still detects the SSB based on an original SSB configuration, the detected SSB may not be an SSB corresponding to the second network device. Subsequently, the terminal device performs radio link detection based on the received SSB, and the obtained radio link detection may be incorrect. That is, the terminal device performs radio link detection based on a configuration of an original reference signal, which affects determining of a radio link failure. Similarly, the terminal device performs beam failure detection based on the configuration of the original reference signal, which also affects determining of a beam failure.

Therefore, the second network device may indicate the terminal device to select the first reference signal corresponding to the target cell. In an implementation, the access method may further include the following step.

S704: The second network device separately sends second indication information to the at least one terminal device. Correspondingly, the at least one terminal device receives the second indication information from the second network device.

For one terminal device, the second indication information may indicate the terminal device to select the first reference signal, and the first reference signal corresponds to the target cell. That the first reference signal corresponds to the target cell may also be understood as that the first reference signal belongs to at least one reference signal corresponding to the target cell. An example in which one terminal device is used. That the second network device sends second indication information to the terminal device may be understood as that the second network device indicates, to the terminal device, the reference signal corresponding to the target cell. The first reference signal may be used for the radio link detection and/or the beam failure detection. After accessing the target cell of the second network device, the terminal device may select the first reference signal based on the second indication information, to perform, based on the first reference signal, radio link detection and/or beam failure detection corresponding to a connection between the terminal device and the second network device. Because the first reference signal is the reference signal corresponding to the target cell, the terminal device performs radio link detection by using the first reference signal, so that an incorrect radio link detection result can be avoided as much as possible, that is, the determining of the radio link failure is avoided. Similarly, the terminal device performs beam failure detection by using the first reference signal, so that impact on the determining of the beam failure can be avoided.

The first network device and the second network device may communicate with each other. In this case, the second network device may provide, for the first network device, information about the first reference signal corresponding to the target cell. Alternatively, the first network device may obtain information about the first reference signal of the target cell from the second network device. If the first network device knows the information about the first reference signal, the second indication information may alternatively be sent by the first network device to the terminal device. In other words, S704 may be replaced with that the first network device separately sends second indication information to the at least one terminal device. Correspondingly, the at least one terminal device receives the second indication information from the first network device, as shown in FIG. 7.

The second indication information has a plurality of implementation forms. A specific implementation form for use is not limited in this embodiment of this application. For example, the second indication information may be implemented in the following four possible implementation forms.

Implementation form 1: Configuration information of the first reference signal. To be specific, the first network device or the second network device provides, for the terminal device, the configuration information of the reference signal corresponding to the target cell, which is direct. After accessing the target cell, the terminal device receives the first reference signal based on the configuration information of the first reference signal. It may be understood that the first network device may obtain the first reference signal of the target cell from the second network device. For example, the first network device may request the second network device to obtain the information about the first reference signal of the target cell of the second network device, and the second network device sends the information about the first reference signal of the target cell to the first network device in response to the request of the first network device. Alternatively, the second network device may actively send the information about the first reference signal of the target cell to the first network device without a request from the first network device.

Implementation form 2: First information and second information. The first information indicates configuration information of the at least one reference signal corresponding to the target cell, and the second information includes an index of the configuration information of the first reference signal. Configuration information of all reference signals (namely, the at least one reference signal) corresponding to the target cell may be predefined, preconfigured, or indicated. In this case, the second network device only needs to provide the index of the configuration information of the first reference signal, and does not need to separately provide the configuration information of the first reference signal each time, thereby reducing signaling overheads.

Implementation form 3: A mapping relationship between at least one reference signal corresponding to the source cell and the at least one reference signal corresponding to the target cell, where the source cell is managed by the first network device. The mapping relationship may be a mapping table, or may be a neural network parameter. The first network device or the second network device may provide the mapping relationship between the at least one reference signal corresponding to the source cell and the at least one reference signal corresponding to the target cell, so that the terminal device may determine the first reference signal based on the reference signal currently used for the radio link detection or the beam failure detection in the source cell and the mapping relationship.

Implementation form 4: A mapping relationship between configuration information of the at least one reference signal corresponding to the target cell and a geographical location area. The geographical area covered by the target cell may be divided into a plurality of location areas, and each area has a corresponding reference signal. In this case, there is a mapping relationship between a configuration of the at least one reference signal corresponding to the target cell and the plurality of areas obtained by dividing the target cell. One reference signal may correspond to one or more location areas, or one location area may correspond to one or more reference signals. The terminal device determines the first reference signal based on a current location area and the mapping relationship. It may be understood that the location area of the terminal device may belong to the one or more location areas obtained by dividing the target cell, so that the terminal device may determine the first reference signal based on the location area of the terminal device and the mapping relationship.

When the second indication information is implemented in the foregoing implementation form 1, implementation form 3, or implementation form 4, a manner in which the first network device or the second network device sends the second indication information to the terminal device is similar to Manner 1 in which the first network device sends the access rule information to the terminal device. Optionally, when the first network device or the second network device uses the CU-DU split architecture, or when the CU is the CU-CP and CU-UP split architecture, and the CU-CP may be further split into a CU-CP 1 and a CU-CP 2, the manner in which the first network device or the second network device sends the second indication information to the terminal device is similar to Manner 1 in which the first network device sends the access rule information to the terminal device. For details, refer to the foregoing manner in which the first network device sends the access rule information to the terminal device. Details are not described herein again.

When the second indication information is implemented in the foregoing implementation form 2, the second indication information includes the first information and the second information. The first information may be carried in the dedicated RRC message or the public RRC message. The second information may be carried in the MAC CE, the PDCCH, the public RRC message, or the dedicated RRC message. For example, the first network device or the second network device may broadcast the first information by using a SIB message, and send the second information to the terminal device by using the MAC CE.

Optionally, if the first network device uses the CU-DU split architecture, the CU may send the first information to the terminal device via the DU, and the DU sends the second information to the terminal device. The CU may further send, to the DU, auxiliary information used to determine the second information, for example, referred to as first auxiliary information. The DU generates the second information based on the first auxiliary information, and sends the second information to the terminal device. The first auxiliary information may include location information of the terminal device and/or configuration information of at least one first reference signal, so that the DU may determine the index of the configuration information of the first reference signal based on the first auxiliary information. Optionally, if the CU is in the CU-CP and CU-UP split architecture, and the CU-CP is further split into two parts, for example, the CU-CP is split into the CU-CP 1 and the CU-CP 2, the CU-CP 2 sends the first information to the terminal device via the DU, and the DU sends the second information to the terminal device. The CU-CP 2 may further send the first auxiliary information to the DU, and the DU generates the second information based on the first auxiliary information, and sends the second information to the terminal device.

Because the reference signals respectively corresponding to the source cell and the target cell may be the same, S704 is not necessarily performed, and is shown by using a dashed line in FIG. 7. In addition, that the first network device sends the second indication information to the terminal device is similar to that the second network device sends the second indication information to the terminal device. Details are not described herein again. It may be understood that the second network device sends the second indication information to the terminal device, which may be performed after the second network device is connected to the second satellite.

It needs to be noted that a sequence of performing S704, S702, and S703 is not limited in this embodiment of this application. For example, the second indication information is broadcast by the first network device, and S704 may be performed before or after S702. For another example, the second indication information is sent by the second network device to the terminal device, the second indication information is implemented in Implementation form 1 or Implementation form 2, and S704 is performed after S702 or S703. For another example, the second indication information is implemented in Implementation form 3 or Implementation form 4, and the second network device may broadcast the second indication information before or after S702. That is, S704 may be performed before or after S702. In addition, a sequence of performing S704 and S701 is not limited in this embodiment of this application. That is, S701 may be performed after S704, or may be performed before S704. In this procedure shown in FIG. 7, the first network device may indicate an access rule to the terminal device. For example, the first network device initiates the access to the target cell of the second network device only after receiving the access indication information from the second network device. The terminal device initiates the access to the target cell of the second network device based on the access indication information from the second network device. In other words, the terminal device may not initiate the access to the target cell if the terminal device does not receive the access indication information from the second network device. For example, the different terminal devices may receive the access indication information on the different occasions, so that the different terminal devices initiate the access to the target cell of the second network device on the different occasions, thereby improving a network access success rate of the terminal device and reducing a network access delay. In addition, the first network device may further provide, for the terminal device, the reference signal corresponding to the target cell, to avoid that the terminal device performs radio link detection and/or beam failure detection based on the originally configured reference signal because a beam on which the terminal device is located changes. This affects the determining of the radio link failure and/or beam recovery.

An embodiment of this application further provides an alternative solution. The following describes the solution in detail.

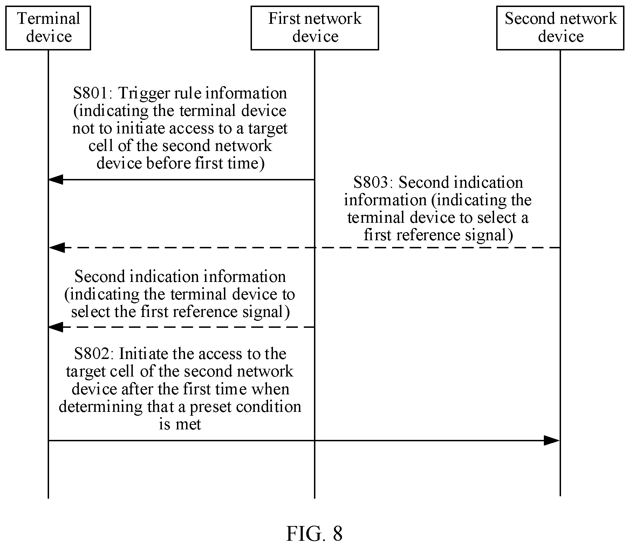

FIG. 8 is a schematic flowchart of another access method according to an embodiment of this application. In the following descriptions, an example in which the communication method is performed by using a first network device, a second network device, and a terminal device is used. In a non-NTN scenario, the first network device may be a source base station in a terrestrial network, and the second network device may be a target base station in the terrestrial network. In an NTN scenario, the first network device may be a first satellite with a base station function, and the second network device may be a second satellite with the base station function. Refer to the architectures of the NTN networks in FIG. 2, FIG. 3, and FIG. 4.

S801: The first network device sends trigger rule information to at least one terminal device. Correspondingly, the at least one terminal device receives the trigger rule information from the first network device.

For any one terminal device, the trigger rule information may indicate the terminal device not to initiate access to a target cell of the second network device before first time. It may also be understood that, when determining to initiate the access to the target cell, the terminal device does not immediately initiate the access to the target cell, but waits for a period of time, for example, the first time, and then initiates the access to the target cell. For example, when the terminal device determines that a condition for initiating the access to the target cell is met, for example, the terminal device determines that signal quality of a source cell is lower than a preset threshold or the source cell stops a service, the terminal device does not initiate the access to the target cell of the second network device before the first time. Different terminal devices correspond to different first time, to avoid that a plurality of terminal devices simultaneously access the second network device. Optionally, terminal devices in different groups correspond to different first time, and terminal devices in a same group may correspond to same first time, to reduce a delay of accessing the network by each terminal device.

The first time may be configured or indicated by the first network device. Optionally, the first time is carried in an RRC message including HO configuration information. Alternatively, the first time is carried in an RRC message including CHO configuration information. It may also be understood that the first network device may send the first time and the CHO configuration information together to the terminal device. For example, the first network device sends an RRC reconfiguration message to the terminal device, where the RRC reconfiguration message includes the CHO configuration information and the first time. It can be learned that the CHO configuration information includes a time-based trigger condition, and the time-based trigger condition includes time information and duration information. For example, the time-based trigger condition includes second time and a second duration. The second time may be considered as start time of the time-based trigger condition, or may be understood as start time of CHO. The second duration is a duration of the time-based trigger condition. Optionally, the time-based trigger condition in the CHO configuration information may be reused for the first time. For example, the first time may be the second time, or the first time is a sum of the second time and the second duration, or the first time is anytime from the second time to the sum of the second time and the second duration. That is, the first network device sends the RRC reconfiguration message to the terminal device, where the RRC reconfiguration information includes the CHO configuration information, and the CHO configuration information includes the second time and the second duration. The terminal device receives the RRC reconfiguration message, and may determine that the second time is the first time, or the sum of the second time and the second duration is the first time.

Optionally, when the first network device uses a CU-DU split architecture, a CU may generate the trigger rule information, and send the trigger rule information to the terminal device via a DU. For example, the trigger rule information is included in a public RRC message (for example, a SIB message) or a dedicated RRC message (for example, carried in the CHO configuration message in the RRC reconfiguration message, or carried in the HO configuration information in the RRC reconfiguration message). Optionally, when the CU includes a CU-CP 1 and a CU-CP 2, the CU-CP 2 may generate the trigger rule information, and send the trigger rule information to the terminal device via the DU.

Optionally, the first network device sends indication information to the terminal device, where the indication information may indicate whether the trigger rule information takes effect. The indication information may be carried in a MAC CE and/or a PDCCH. For example, when the first network device uses the CU-DU split architecture, the CU may generate auxiliary information used by the DU to determine whether to trigger the terminal device to take effect the trigger rule information, for example, referred to as second auxiliary information. The second auxiliary information may include configuration information of the trigger rule information and/or third information, and the third information may indicate whether the CU sends the trigger rule information to the terminal device. The CU sends the second auxiliary information to the DU, and the DU may generate the indication information based on the second auxiliary information, and send the indication information to the terminal device. For example, the second auxiliary information includes the third information, the third information indicates that the CU sends the trigger rule information to the terminal device, and the indication information generated by the DU based on the second auxiliary information may indicate the terminal device to take effect the trigger rule information. For another example, the second auxiliary information includes the configuration information of the trigger rule information, the configuration information indicates that the trigger rule information is enabled, and the indication information generated by the DU based on the second auxiliary information may indicate the terminal device to take effect the trigger rule information. Optionally, when the CU includes the CU-CP 1 and the CU-CP 2, the CU-CP 2 may generate the second auxiliary information, and send the second auxiliary information to the DU.

S802: The terminal device initiates the access to the target cell of the second network device after the first time when determining that a preset condition is met.

The preset condition may also be understood as a predefined condition for initiating the access. For example, the signal quality of the source cell is lower than the preset threshold or the source cell stops the service. Usually, when the signal quality of the source cell is lower than the preset threshold or the source cell stops the service, the terminal device triggers a radio link failure (radio link failure, RLF), and then triggers RRC reestablishment. The terminal device selects a target cell, to initiate the access in the target cell. From this perspective, the trigger rule information may also be understood as information indicating a rule for triggering the RLF. The terminal device does not initiate the access to the target cell before the first time may mean that the terminal device does not initiate the access to the target cell before the first time even if the preset condition is met. For example, before the first time, even if the terminal device meets the preset condition, the terminal device does not trigger the RLF or the RRC reestablishment, and therefore does not initiate the access to the target cell; or before the first time, even if the terminal device meets the preset condition and triggers the RLF, the terminal device does not trigger the RRC reestablishment, and does not initiate the access to the target cell. Alternatively, before the first time, even if the terminal device meets the preset condition and triggers the RLF and the RRC reestablishment, the terminal device is not triggered to initiate the access to the target cell. Certainly, even if the terminal device triggers the RLF or triggers the RRC reestablishment, the terminal device needs to initiate the access to the target cell after the first time. For example, the terminal device triggers the RRC reestablishment, and selects the target cell in an RRC reestablishment process. However, before the first time, the terminal device does not initiate the access to the target cell. The terminal device initiates the access to the target cell after the first time when determining that the preset condition is met. It should be noted that alternatively, the terminal device may not determine whether the preset condition is met, and the terminal device may initiate the access to the target cell only after the first time. Therefore, even if the preset condition is not met, the terminal device may initiate the access to the target cell after the first time.

S803: The second network device sends second indication information to the at least one terminal device. Correspondingly, the at least one terminal device receives the second indication information from the second network device.

In another implementation, S803 may alternatively be replaced with: The first network device sends second indication information to the at least one terminal device. Correspondingly, the at least one terminal device receives the second indication information from the second network device. Specific implementation of S803 is the same as specific implementation of S704. For details, refer to related content in S704. Details are not described herein again. It should be understood that S803 is not necessarily performed, and therefore is shown by using a dashed line in FIG. 8. A sequence of performing S802 and S803 is not limited in this embodiment of this application. S803 may be performed before S802, or may be performed after S802. For example, the first network device may broadcast the second indication information before or after S802. If the second indication information is implemented in the foregoing implementation form 1 and implementation form 2, the second indication information is sent by the second network device to the terminal device, and S803 is performed after S802. If the second indication information is implemented in the foregoing implementation form 3 and implementation form 4, the second indication information is sent by the second network device to the terminal device, and S803 may be performed before or after S802. If the second indication information is sent by the second network device to the terminal device, after the second network device sends ephemeris information of the second satellite to the terminal device, the second network device may send the second indication information to the terminal device, as shown in FIG. 8. S803 may be performed before S801, or may be performed after S801.

In a procedure shown in FIG. 8, when determining that the terminal device needs to be handed over from the source cell to the target cell when the preset condition is met, the terminal device does not immediately initiate the access to the target cell, but initiates the access to the target cell after the first time. For example, after determining the RLF, the terminal device does not immediately trigger the RLF or the RRC reestablishment, but triggers the RLF and the RRC reestablishment after the first time is reached, to initiate the access to the target cell. For another example, after determining the RLF, the terminal device does not immediately trigger the RLF or the RRC reestablishment, and does not trigger the RLF or the RRC reestablishment either after the first time, but directly initiates the access to the target cell. If receiving the access indication information before the first time, the terminal device may directly initiate the access to the target cell without triggering the RLF or the RRC reestablishment. The different terminal devices correspond to the different first time, so that terminal devices that contend for simultaneously accessing the target cell can also be reduced, and a success rate of accessing the network by each terminal device can be improved.

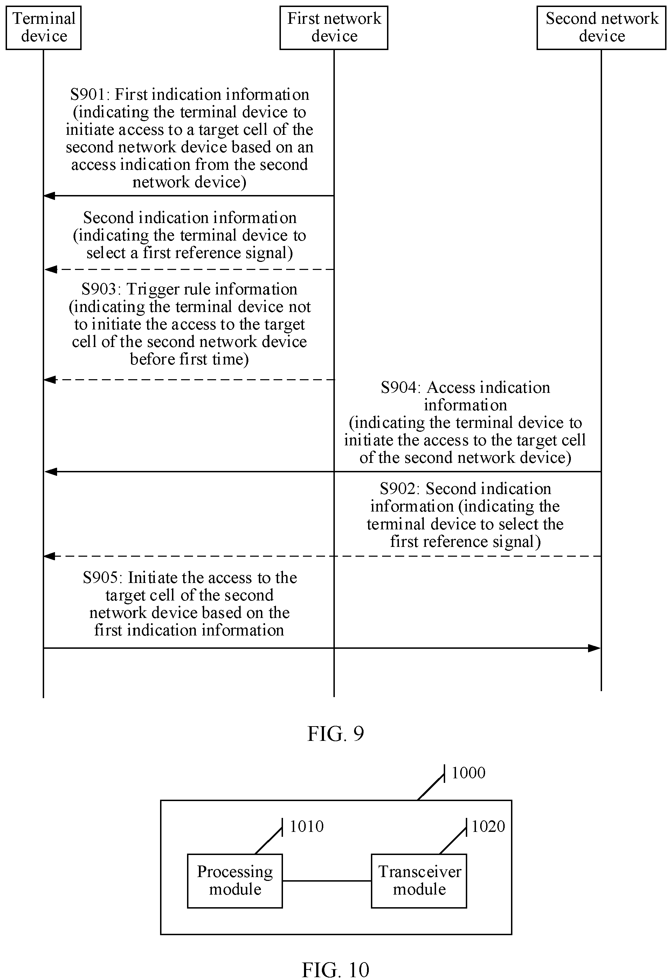

The procedures shown in FIG. 7 and FIG. 8 may also be combined with each other. For example, FIG. 9 is a schematic flowchart of another access method according to an embodiment of this application.

S901: A first network device sends first indication information to a terminal device. Correspondingly, the terminal device receives the first indication information from the first network device.

S902: The second network device sends second indication information to the terminal device. Correspondingly, the terminal device receives the second indication information from the second network device.

S903: The first network device sends trigger rule information to the terminal device. Correspondingly, the terminal device receives the trigger rule information from the first network device.

S904: The second network device sends access indication information to the terminal device. Correspondingly, the terminal device receives the access indication information from the second network device.

S905: The terminal device initiates access to a target cell of the second network device based on the first indication information.

For details about steps in a procedure shown in FIG. 9, refer to related content in corresponding steps in FIG. 7 and FIG. 8. Details are not described herein again. In the procedure shown in FIG. 9, both S902 and S903 are optional steps, and therefore are shown by using dashed lines. In addition, S903 may be performed before S902, or may be performed after S902. S903 may be performed before S901, or may be performed after S901. S904 may be performed before S903, or may be performed after S903. S902 may be performed before S904, or may be performed after S904.

In the procedure shown in FIG. 9, the terminal device may initiate the access to the target cell of the second network device based on the access indication information from the second network device, so that a success rate of accessing a network by the terminal device can be improved, and an access delay can be reduced. When determining that the terminal device needs to be handed over from a source cell to the target cell when a preset condition is met, the terminal device may not immediately initiate the access to the target cell, but initiate the access to the target cell after the first time. This can also improve a success rate of accessing the network by the terminal device. Alternatively, when a preset condition is met, the terminal device may still initiate the access to the target cell of the second network device after the first time based on the access indication information from the second network device. For example, during RRC reestablishment, when selecting a cell, the terminal device still selects, as a candidate cell for the access, a cell in which the access indication information waits to be received, and listens to the access indication information under the cell, to access the target cell.

In the embodiments provided in this application, the methods provided in embodiments of this application are separately described from perspectives of the terminal device, the first network device, the second network device, and interaction between the terminal device, the first network device, and the second network device. To implement functions in the foregoing methods provided in embodiments of this application, the terminal device, the first network device, and the second network device may include a hardware structure and/or a software module, and implement the foregoing functions in a form of the hardware structure, the software module, or a combination of the hardware structure and the software module. Whether a function in the foregoing functions is performed in the manner of the hardware structure, the software module, or the combination of the hardware structure and the software module depends on particular applications and a design constraint conditions of the technical solutions.

The following describes, with reference to the accompanying drawings, a communication apparatus configured to implement the foregoing methods in embodiments of this application.

FIG. 10 is a block diagram of a communication apparatus 1000 according to an embodiment of this application. The communication apparatus 1000 may include a processing module 1010 and a transceiver module 1020. Optionally, a storage unit may be further included. The storage unit may be configured to store instructions (code or a program) and/or data. The processing module 1010 and the transceiver module 1020 may be coupled to the storage unit. For example, the processing module 1010 may read the instructions (the code or the program) and/or the data in the storage unit, to implement a corresponding method. The foregoing modules may be disposed independently, or may be partially or completely integrated.

In some possible implementations, the communication apparatus 1000 can correspondingly implement behavior and a function of the terminal device in the foregoing method embodiments. The communication apparatus 1000 may be the terminal device, or may be a component (for example, a chip or a circuit) used in the terminal device, or may be a chip or a chip set in the terminal device, or a part of a chip that is configured to perform a related method function.

For example, the communication apparatus 1000 implements the method performed by the terminal device in FIG. 7 or FIG. 9 in embodiments of this application. The transceiver module 1020 is configured to: receive first indication information from a first network device, receive access indication information from a second network device, and initiate access to a target cell of the second network device based on the access indication information. The first indication information indicates the communication apparatus 1000 to initiate the access to the target cell of the second network device based on the access indication information from the second network device. The processing module 1010 is configured to determine access indication information.

In an optional implementation, the first indication information is included in access rule information, and the access rule information further includes a first duration. The transceiver module 1020 is specifically configured to receive the access indication information within the first duration.

In an optional implementation, the transceiver module 1020 is specifically configured to receive the access indication information within the first duration after the communication apparatus 1000 disconnects a connection to the first network device.

In an optional implementation, the first indication information is included in access rule information, the access rule information further includes cell information, and the cell information indicates the target cell. The transceiver module 1020 is specifically configured to receive the access indication information in the target cell.

In an optional implementation, the transceiver module 1020 is specifically configured to initiate the access to the target cell based on the access indication information after the communication apparatus 1000 disconnects the connection to the first network device.

In an optional implementation, the transceiver module 1020 is further configured to receive second indication information from the first network device or the second network device, where the second indication information indicates the communication apparatus 1000 to select a first reference signal. The first reference signal belongs to at least one reference signal corresponding to the target cell, and the first reference signal is used for radio link detection and/or beam failure detection.

In an optional implementation, the second indication information includes any one of the following:
configuration information of the first reference signal; first information and second information, where the first information indicates configuration information of the at least one reference signal corresponding to the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In an optional implementation, the access indication information includes third indication information, the third indication information indicates a second reference signal, and the second reference signal is used to determine an access occasion.

In an optional implementation, the access indication information includes fourth indication information, and the fourth indication information includes a first time interval, indicating the communication apparatus 1000 to initiate the access to the target cell after the first time interval since the terminal device receives the access indication information.

In an optional implementation, the transceiver module 1020 is further configured to receive trigger rule information from the first network device, where the trigger rule information indicates the communication apparatus 1000 not to initiate the access to the target cell before the first time. The processing module 1010 is further configured to initiate the access to the target cell after the first time when determining that a preset condition is met.

In an optional implementation, the first time is carried in an RRC message including CHO configuration information.

In an optional implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration.

In an optional implementation, after the communication apparatus 1000 accesses the second network device, the processing module 1010 is further configured to: reserve a first part configuration of a MAC layer, and delete a second part configuration of the MAC layer.

For another example, the communication apparatus 1000, implements the method performed by the terminal device in FIG. 8 or FIG. 9 in embodiments of this application. The transceiver module 1020 is configured to receive trigger rule information from a first network device, where the trigger rule information indicates the communication apparatus 1000 not to initiate access to a target cell of a second network device before first time. The processing module 1010 is configured to initiate the access to the target cell after the first time when determining that a preset condition is met. The first time is indicated by the first network device. The preset condition includes: signal quality of the source cell is lower than a preset threshold, or the source cell stops a service.

In an optional implementation, the first time is carried in an RRC message including CHO configuration information.

In an optional implementation, the CHO configuration information includes a time-based trigger condition, and the time-based trigger condition includes second time and a second duration. The second time is start time of the time-based trigger condition, and the second duration is a duration of the time-based trigger condition. The first time is the second time, or the first time is a sum of the second time and the second duration.

In an optional implementation, the transceiver module 1020 is further configured to receive second indication information from the first network device or the second network device, where the second indication information indicates the communication apparatus 1000 to select a first reference signal. The first reference signal belongs to at least one reference signal corresponding to the target cell, and the first reference signal is used for radio link detection and/or beam failure detection.

In an optional implementation, the second indication information includes any one of the following:
configuration information of the first reference signal; first information and second information, where the first information indicates configuration information of the at least one reference signal corresponding to the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In some possible implementations, the communication apparatus 1000 can correspondingly implement behavior and a function of the network device in the foregoing method embodiments. The communication apparatus 1000 may be the network device, or may be a component (for example, a chip or a circuit) used in the network device, or may be a chip or a chip set in the network device, or a part of a chip that is configured to perform a related method function.

For example, the communication apparatus 1000 implements the method performed by the first network device in FIG. 7 in any embodiment of this application. The processing module 1010 is configured to determine first indication information, where the first indication information indicates a terminal device to initiate access to a target cell of a second network device based on access indication information from the second network device. The transceiver module 1020 is configured to send the first indication information to the terminal device.

In an optional implementation, the first indication information is included in access rule information, the access rule information further includes a first duration, and the first duration indicates the terminal device to receive the access indication information within the first duration.

In an optional implementation, the first indication information is included in the access rule information, the access rule information further includes cell information, and the cell information indicates the terminal device to receive the access indication information in the target cell.

In an optional implementation, the transceiver module 1020 is further configured to send second indication information to the terminal device, where the second indication information indicates the terminal device to select a first reference signal. The first reference signal belongs to at least one reference signal corresponding to the target cell, and the first reference signal is used for radio link detection and/or beam failure detection.

In an optional implementation, the second indication information includes any one of the following:
configuration information of the first reference signal; first information and second information, where the first information indicates configuration information of the at least one reference signal of the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and a geographical location area.

In an optional implementation, the access indication information includes third indication information, the third indication information indicates a second reference signal, and the second reference signal is used to determine an access occasion.

In an optional implementation, the access indication information includes fourth indication information, and the fourth indication information includes a first time interval, indicating the terminal device to initiate the access to the target cell after the first time interval since the terminal device receives the access indication information.

In an optional implementation, the transceiver module 1020 is further configured to send trigger rule information to the terminal device, where the trigger rule information indicates the terminal device not to initiate the access to the target cell before first time, and the first time is indicated by the first network device.

In an optional implementation, the first time is carried in an RRC message including CHO configuration information.

In an optional implementation, the CHO configuration information includes a time-based trigger condition, the time-based trigger condition includes second time and a second duration, the second time is start time of the time-based trigger condition, and the second duration is a duration of the time-based trigger condition. The first time is the second time, or the first time is a sum of the second time and the second duration.

For example, the communication apparatus 1000 implements the method performed by the first network device in FIG. 8 or FIG. 9 in any embodiment of this application. The processing module 1010 is configured to determine trigger rule information, where the trigger rule information indicates a terminal device not to initiate access to a target cell of a second network device before first time. The first time is indicated by the communication apparatus 1000. The transceiver module 1020 is configured to send the trigger rule information to the terminal device.

In an optional implementation, different terminal devices correspond to different first time.

In an optional implementation, the first time is carried in an RRC message including CHO configuration information.

In an optional implementation, the CHO configuration information includes a time-based trigger condition, the time-based trigger condition includes second time and a second duration, the second time is start time of the time-based trigger condition, and the second duration is a duration of the time-based trigger condition. The first time is the second time, or the first time is a sum of the second time and the second duration.

In an optional implementation, the transceiver module 1020 is further configured to send second indication information to the terminal device, where the second indication information indicates the terminal device to select a first reference signal. The first reference signal belongs to at least one reference signal corresponding to the target cell, and the first reference signal is used for radio link detection and/or beam failure detection.

In an optional implementation, the second indication information includes any one of the following:
configuration information of the first reference signal; first information and second information, where the first information indicates configuration information of the at least one reference signal of the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and location information of the terminal device.

For example, the communication apparatus 1000 implements the method performed by the second network device in FIG. 7 or FIG. 9 in any embodiment of this application. The processing module 1010 is configured to determine access indication information, where the access indication information indicates one or more terminal devices to separately initiate access to a target cell of the communication apparatus 1000. The transceiver module 1020 is further configured to separately send the access indication information to the one or more terminal devices.

In an optional implementation, the transceiver module 1020 is specifically configured to separately send the access indication information to the plurality of terminal devices, where the transceiver module 1020 sends the access indication information to the terminal devices on different sending occasions, or the transceiver module 1020 separately sends, to the plurality of terminal devices on different sending occasions, the access indication information indicating time-frequency resources used by the plurality of terminal devices to initiate the access, and different time-frequency resources are configured for the plurality of terminal devices.

In an optional implementation, the transceiver module 1020 is further configured to separately send second indication information to the one or more terminal devices, where the second indication information indicates the one or more terminal devices to select a first reference signal. The first reference signal belongs to at least one reference signal corresponding to the target cell, and the first reference signal is used for radio link detection and/or beam failure detection.

In an optional implementation, the second indication information includes any one of the following:
configuration information of the first reference signal; first information and second information, where the first information indicates configuration information of the at least one reference signal of the target cell, and the second information includes an index of the configuration information of the first reference signal; a mapping relationship between at least one reference signal corresponding to a source cell and the at least one reference signal corresponding to the target cell, where the source cell is managed by the first network device; or a mapping relationship between configuration information of the at least one reference signal corresponding to the target cell and location information of the terminal device.

It should be understood that in this embodiment of this application, the processing module 1010 may be implemented by a processor or a processor-related circuit component, and the transceiver module 1020 may be implemented by a transceiver, a transceiver-related circuit component, or a communication interface.

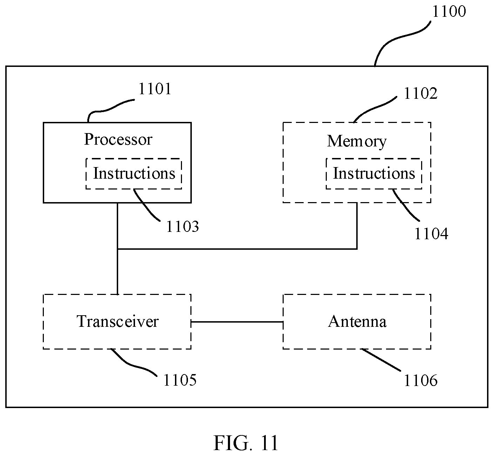

FIG. 11 is a block diagram of a communication apparatus 1100 according to an embodiment of this application. The communication apparatus 1100 may be a terminal device, and can implement a function of the terminal device in the methods provided in embodiments of this application. Alternatively, the communication apparatus 1100 may be an apparatus that can support the terminal device in implementing a corresponding function in the methods provided in embodiments of this application. The communication apparatus 1100 may be a chip system. In this embodiment of this application, the chip system may include a chip, or may include a chip and another discrete device. For a specific function, refer to descriptions of the foregoing method embodiments. Alternatively, the communication apparatus 1100 may be a first network device, and can implement a function of the first network device in the methods provided in embodiments of this application. Alternatively, the communication apparatus 1100 may be an apparatus that can support the first network device in implementing a corresponding function in the methods provided in embodiments of this application. The communication apparatus 1100 may be a chip system. In this embodiment of this application, the chip system may include a chip, or may include a chip and another discrete device. For a specific function, refer to descriptions of the foregoing method embodiments. Alternatively, the communication apparatus 1100 may be a second network device, and can implement a function of the second network device in the methods provided in embodiments of this application. Alternatively, the communication apparatus 1100 may be an apparatus that can support the first network device in implementing a corresponding function in the methods provided in embodiments of this application. The communication apparatus 1100 may be a chip system. In this embodiment of this application, the chip system may include a chip, or may include a chip and another discrete device. For a specific function, refer to descriptions of the foregoing method embodiments.

The communication apparatus 1100 includes one or more processors 1101 that may be configured to implement or support the communication apparatus 1100 in implementing the function of the terminal device in the methods provided in embodiments of this application. For details, refer to detailed descriptions in the method examples. Details are not described herein again. The one or more processors 1101 may alternatively be configured to implement or support the communication apparatus 1100 in implementing a function of the first network device or the second network device in the methods provided in embodiments of this application. For details, refer to detailed descriptions in the method examples. Details are not described herein again. The processor 1101 may also be referred to as a processing unit or a processing module, and may implement a specific control function. The processor 1101 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural network processor. The central processing unit may be configured to control the communication apparatus 1100, execute a software program, and/or process data. Different processors may be independent devices, or may be integrated into one or more processors, for example, integrated into one or more application-specific integrated circuits.

Optionally, the communication apparatus 1100 includes one or more memories 1102 that are configured to store instructions 1104. The instructions may be run on the processor 1101, to enable the communication apparatus 1100 to perform the methods described in the foregoing method embodiments. The memory 1102 and the processor 1101 may be separately disposed, or may be integrated together, or it may be considered that the memory 1102 is coupled to the processor 1101. The coupling in this embodiment of this application may be an indirect coupling or a communication connection between apparatuses, units, or modules in an electrical form, a mechanical form, or another form, and is used for information exchange between the apparatuses, the units, or the modules. The processor 1101 may cooperate with the memory 1102 in an operation. At least one of at least one memory may be included in the processor. It needs to be noted that the memory 1102 is not mandatory, and therefore is shown by using a dashed line in FIG. 11.

Optionally, the memory 1102 may further store data. The processor and the memory may be separately disposed, or may be integrated together. In this embodiment of this application, the memory 1102 may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

Optionally, the communication apparatus 1100 may include instructions 1103 (which may also be referred to as code or a program sometimes), and the instructions 1103 may be run on the processor, so that the communication apparatus 1100 performs the methods described in the foregoing embodiments. The processor 1101 may store data.

Optionally, the communication apparatus 1100 may further include a transceiver 1105 and an antenna 1106. The transceiver 1105 may be referred to as a transceiver unit, a transceiver module, a transceiver device, a transceiver circuit, a transceiver, an input/output interface, or the like, and is configured to implement a transceiver function of the communication apparatus 1100 through the antenna 1106.

The processor 1101 and the transceiver 1105 described in this application may be implemented on an integrated circuit (integrated circuit, IC), an analog IC, a radio frequency integrated circuit (radio frequency identification, RFID), a mixed-signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1100 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1100 may include more or fewer components, or some components are integrated, or some components are split. These components may be implemented by hardware, software, or a combination of software and hardware.

It needs to be noted that the communication apparatus in the foregoing embodiments may be a terminal device (or a network device), may be a circuit, may be a chip used in the terminal device (or the network device), or may be another combined device, component, or the like that has a function of the terminal device (or the network device). When the communication apparatus is the terminal device (or the network device), the transceiver module may be the transceiver, and may include the antenna, a radio frequency circuit, and the like, and the processing module may be the processor, for example, a central processing module (central processing unit, CPU). When the communication apparatus is the component that has the function of the terminal device (or the network device), the transceiver module may be a radio frequency unit, and the processing module may be the processor. When the communication apparatus is the chip system, the communication apparatus may be a field programmable gate array (field programmable gate array, FPGA), an application-specific integrated chip (application-specific integrated circuit, ASIC), a system on chip (system on chip, SoC), a CPU, a network processor (network processor, NP), a digital signal processing circuit (digital signal processor, DSP), a microcontroller (microcontroller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory via another device) and transmit the code instructions to the processor. The processor may be configured to run the code instructions to perform the methods in the foregoing method embodiments. For another example, the interface circuit may alternatively be a signal transmission interface circuit between a communication processor and a transceiver device.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a communication system. Specifically, the communication system includes at least one first network device and at least one second network device. For example, the communication system includes a first network device and a second network device that are configured to implement a related function in any procedure in FIG. 7 to FIG. 9. For details, refer to related descriptions in the method embodiments. Details are not described herein again. The communication system may further include a terminal device, and the terminal device is a terminal device configured to implement a related function in any procedure in FIG. 7 to FIG. 9.

An embodiment of this application further provides a computer-readable storage medium, including instructions. When the instructions are run on a computer, the computer is enabled to perform the method performed by the terminal device in any procedure in FIG. 7 to FIG. 9. Alternatively, when the instructions are run on a computer, the computer is enabled to perform the method performed by the first network device in any procedure in FIG. 7 to FIG. 9; or when the instructions are run on a computer, the computer is enabled to perform the method performed by the second network device in any procedure in FIG. 7 to FIG. 9.

An embodiment of this application further provides a computer program product, including instructions. When the instructions are run on a computer, the computer is enabled to perform the method performed by the terminal device in any procedure in FIG. 7 to FIG. 9. Alternatively, when the instructions are run on a computer, the computer is enabled to perform the method performed by the first network device in any procedure in FIG. 7 to FIG. 9; or when the instructions are run on a computer, the computer is enabled to perform the method performed by the second network device in any procedure in FIG. 7 to FIG. 9.

An embodiment of this application provides a chip system. The chip system includes a processor, and may further include: a memory, configured to implement a function of the first network device or a function of the second network device in the foregoing method, or configured to implement a function of the terminal device in the foregoing method. The chip system may include a chip, or may include a chip and another discrete device.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, various illustrative logical blocks (illustrative logical blocks) and steps (steps) described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division, and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of the embodiments.

When the functions are implemented in a form of a software functional unit and sold or used as an independent product, the functions may be stored in a computer-readable storage medium. Based on such an understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium that can store program code, for example, a USB flash drive, a removable hard disk, a read-only memory (read-only memory, ROM), a RAM, a magnetic disk, or an optical disc.

It is clear that a person skilled in the art can make various modifications and variations to this application without departing from the scope of this application. In this way, if these modifications and variations to this application fall within the scope of the claims of this application and their equivalent technologies, this application is also intended to cover these modifications and variations.

## Claims

1. An access method, comprising:
receiving, by a terminal device, first indication information from a first network device, wherein the first indication information indicates the terminal device to initiate access to a target cell of a second network device based on access indication information from the second network device;
receiving, by the terminal device, the access indication information from the second network device; and
initiating, by the terminal device, the access to the target cell based on the access indication information.

2. The method according to claim 1, wherein the first indication information is comprised in access rule information, the access rule information further comprises a first duration, and the receiving, by the terminal device, the access indication information from the second network device comprises:
receiving, by the terminal device, the access indication information within the first duration.

3. The method according to claim 1 or 2, wherein the receiving, by the terminal device, the access indication information within the first duration comprises:
receiving, by the terminal device, the access indication information within the first duration after disconnecting a connection to the first network device.

4. The method according to any one of claims 1 to 3, wherein the first indication information is comprised in the access rule information, the access rule information further comprises cell information, the cell information indicates the target cell, and the terminal device receives the access indication information in the target cell.

5. The method according to any one of claims 1 to 4, wherein the initiating, by the terminal device, the access to the target cell based on the access indication information comprises:
initiating, by the terminal device, the access to the target cell based on the access indication information after disconnecting the connection to the first network device.

6. The method according to any one of claims 1 to 5, wherein the method further comprises:
receiving, by the terminal device, second indication information from the first network device or the second network device, wherein the second indication information indicates the terminal device to select a first reference signal, the first reference signal belongs to at least one reference signal corresponding to the target cell, and the first reference signal is used for radio link detection and/or beam failure detection.

7. The method according to claim 6, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the first network device; or
a mapping relationship between configuration information of the at least one reference signal corresponding to the target cell and a geographical location area.

8. The method according to any one of claims 1 to 7, wherein the access indication information comprises third indication information, the third indication information indicates a second reference signal, and the second reference signal is used to determine an access occasion.

9. The method according to any one of claims 1 to 8, wherein the access indication information comprises fourth indication information, and the fourth indication information comprises a first time interval, indicating the terminal device to initiate the access to the target cell after the first time interval since the terminal device receives the access indication information.

10. The method according to any one of claims 1 to 9, wherein the method further comprises:
receiving, by the terminal device, trigger rule information from the first network device, wherein the trigger rule information indicates the terminal device not to initiate the access to the target cell before first time, and the first time is indicated by the first network device; and
initiating, by the terminal device, the access to the target cell after the first time when determining that a preset condition is met, wherein the preset condition comprises: signal quality of the source cell is less than a preset threshold, or the source cell stops a service.

11. The method according to claim 10, wherein the first time is carried in a radio resource control RRC message comprising conditional handover CHO configuration information.

12. The method according to claim 11, wherein the CHO configuration information comprises a time-based trigger condition, the time-based trigger condition comprises second time and a second duration, the second time is start time of the time-based trigger condition, and the second duration is a duration of the time-based trigger condition, wherein the first time is the second time, or the first time is a sum of the second time and the second duration.

13. The method according to any one of claims 1 to 12, wherein the method further comprises:
after accessing the second network device, reserving, by the terminal device, a first part configuration of a media access control MAC layer, and deleting a second part configuration of the MAC layer.

14. An access method, comprising:
determining, by a first network device, first indication information, wherein the first indication information indicates a terminal device to initiate access to a target cell of a second network device based on access indication information from the second network device; and
sending, by the first network device, the first indication information to the terminal device.

15. The method according to claim 14, wherein the first indication information is comprised in access rule information, the access rule information further comprises a first duration, and the first duration indicates the terminal device to receive the access indication information within the first duration.

16. The method according to claim 14 or 15, wherein the first indication information is comprised in the access rule information, the access rule information further comprises cell information, and the cell information indicates the terminal device to receive the access indication information in the target cell.

17. The method according to any one of claims 14 to 16, wherein the method further comprises:
sending, by the first network device, second indication information to the terminal device, wherein the second indication information indicates the terminal device to select a first reference signal, the first reference signal belongs to at least one reference signal corresponding to the target cell, and the first reference signal is used for radio link detection and/or beam failure detection.

18. The method according to claim 17, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the first network device; or
a mapping relationship between configuration information of the at least one reference signal corresponding to the target cell and a geographical location area.

19. The method according to any one of claims 14 to 18, wherein the access indication information comprises third indication information, the third indication information indicates a second reference signal, and the second reference signal is used to determine an access occasion.

20. The method according to any one of claims 14 to 19, wherein the access indication information comprises fourth indication information, and the fourth indication information comprises a first time interval, indicating the terminal device to initiate the access to the target cell after the first time interval since the terminal device receives the access indication information.

21. The method according to any one of claims 14 to 20, wherein the method further comprises:
sending, by the first network device, trigger rule information to the terminal device, wherein the trigger rule information indicates the terminal device not to initiate the access to the target cell before first time, and the first time is indicated by the first network device.

22. The method according to claim 21, wherein the first time is carried in a radio resource control RRC message comprising conditional handover CHO configuration information.

23. The method according to claim 22, wherein the CHO configuration information comprises a time-based trigger condition, the time-based trigger condition comprises second time and a second duration, the second time is start time of the time-based trigger condition, and the second duration is a duration of the time-based trigger condition, wherein the first time is the second time, or the first time is a sum of the second time and the second duration.

24. An access method, comprising:
determining, by a second network device, access indication information; and
separately sending, by the second network device, the access indication information to one or more terminal devices, to indicate the one or more terminal devices to separately initiate access to a target cell of the second network device, wherein after receiving first indication information from a first network device, the one or more terminal devices separately initiate the access to the target cell based on the access indication information.

25. The method according to claim 24, wherein the separately sending, by the second network device, the access indication information to one or more terminal devices comprises:
separately sending, by the second network device, the access indication information to the plurality of terminal devices, wherein the second network device sends the access indication information to the terminal devices on different sending occasions, or the second network device separately sends, to the plurality of terminal devices on different sending occasions, the access indication information indicating time-frequency resources used by the plurality of terminal devices to initiate the access, and different time-frequency resources are configured for the plurality of terminal devices.

26. The method according to claim 24 or 25, wherein the method further comprises:
separately sending, by the second network device, second indication information to the one or more terminal devices, wherein the second indication information indicates the one or more terminal devices to select a first reference signal, the first reference signal belongs to at least one reference signal corresponding to the target cell, and the first reference signal is used for radio link detection and/or beam failure detection.

27. The method according to claim 26, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the first network device; or
a mapping relationship between configuration information of the at least one reference signal corresponding to the target cell and a geographical location area.

28. The method according to any one of claims 24 to 27, wherein the access indication information comprises third indication information, the third indication information indicates a second reference signal, and the second reference signal is used by the terminal device to determine an access occasion.

29. The method according to any one of claims 24 to 28, wherein the access indication information comprises fourth indication information, and the fourth indication information comprises a first time interval, indicating the terminal device to initiate the access to the target cell after the first time interval since the terminal device receives the access indication information.

30. A communication apparatus, comprising:
a transceiver module, configured to receive first indication information from a first network device, wherein the first indication information indicates the communication apparatus to initiate access to a target cell of a second network device based on access indication information from the second network device, wherein
the transceiver module is further configured to receive the access indication information from the second network device; and
a processing module, configured to initiate the access to the target cell based on the access indication information.

31. The apparatus according to claim 30, wherein the first indication information is comprised in access rule information, and the access rule information further comprises a first duration; and
the transceiver module is specifically configured to receive the access indication information within the first duration.

32. The apparatus according to claim 30 or 31, wherein the transceiver module is specifically configured to:
receive the access indication information within the first duration after the communication apparatus disconnects a connection to the first network device.

33. The apparatus according to any one of claims 30 to 32, wherein the first indication information is comprised in the access rule information, the access rule information further comprises cell information, the cell information indicates the target cell, and the communication apparatus receives the access indication information in the target cell.

34. The apparatus according to any one of claims 30 to 33, wherein the processing module is specifically configured to:
initiate the access to the target cell based on the access indication information after disconnecting the connection to the first network device.

35. The apparatus according to any one of claims 30 to 34, wherein the transceiver module is further configured to:
receive second indication information from the first network device or the second network device, wherein the second indication information indicates the communication apparatus to select a first reference signal, the first reference signal belongs to at least one reference signal corresponding to the target cell, and the first reference signal is used for radio link detection and/or beam failure detection.

36. The apparatus according to claim 35, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the first network device; or
a mapping relationship between configuration information of the at least one reference signal corresponding to the target cell and a geographical location area.

37. The apparatus according to any one of claims 30 to 36, wherein the access indication information comprises third indication information, the third indication information indicates a second reference signal, and the second reference signal is used to determine an access occasion.

38. The apparatus according to any one of claims 30 to 37, wherein the access indication information comprises fourth indication information, and the fourth indication information comprises a first time interval, indicating the communication apparatus to initiate the access to the target cell after the first time interval since the communication apparatus receives the access indication information.

39. The apparatus according to any one of claims 30 to 38, wherein the transceiver module is further configured to:
receive trigger rule information from the first network device, wherein the trigger rule information indicates the communication apparatus not to initiate the access to the target cell before first time, and the first time is indicated by the first network device; and
the processing module is specifically configured to initiate the access to the target cell after the first time when determining that a preset condition is met, wherein the preset condition comprises: signal quality of the source cell is less than a preset threshold, or the source cell stops a service.

40. The apparatus according to claim 39, wherein the first time is carried in a radio resource control RRC message comprising conditional handover CHO configuration information.

41. The apparatus according to claim 40, wherein the CHO configuration information comprises a time-based trigger condition, the time-based trigger condition comprises second time and a second duration, the second time is start time of the time-based trigger condition, and the second duration is a duration of the time-based trigger condition, wherein the first time is the second time, or the first time is a sum of the second time and the second duration.

42. The apparatus according to any one of claims 30 to 41, wherein the processing module is further configured to:
after accessing the second network device, reserve a first part configuration of a media access control MAC layer, and delete a second part configuration of the MAC layer.

43. A communication apparatus, comprising:
a processing module, configured to determine first indication information, wherein the first indication information indicates a terminal device to initiate access to a target cell of a second network device based on access indication information from the second network device; and
a transceiver module, configured to send the first indication information to the terminal device.

44. The apparatus according to claim 43, wherein the first indication information is comprised in access rule information, the access rule information further comprises a first duration, and the first duration indicates the terminal device to receive the access indication information within the first duration.

45. The apparatus according to claim 43 or 44, wherein the first indication information is comprised in the access rule information, the access rule information further comprises cell information, and the cell information indicates the terminal device to receive the access indication information in the target cell.

46. The apparatus according to any one of claims 43 to 45, wherein the transceiver module is further configured to:
send second indication information to the terminal device, wherein the second indication information indicates the terminal device to select a first reference signal, the first reference signal belongs to at least one reference signal corresponding to the target cell, and the first reference signal is used for radio link detection and/or beam failure detection.

47. The apparatus according to claim 46, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the communication apparatus; or
a mapping relationship between configuration information of the at least one reference signal corresponding to the target cell and a geographical location area.

48. The apparatus according to any one of claims 43 to 47, wherein the access indication information comprises third indication information, the third indication information indicates a second reference signal, and the second reference signal is used to determine an access occasion.

49. The apparatus according to any one of claims 43 to 48, wherein the access indication information comprises fourth indication information, and the fourth indication information comprises a first time interval, indicating the terminal device to initiate the access to the target cell after the first time interval since the terminal device receives the access indication information.

50. The apparatus according to any one of claims 43 to 49, wherein the transceiver module is further configured to:
send trigger rule information to the terminal device, wherein the trigger rule information indicates the terminal device not to initiate the access to the target cell before first time, and the first time is indicated by the communication apparatus.

51. The apparatus according to claim 50, wherein the first time is carried in a radio resource control RRC message comprising conditional handover CHO configuration information.

52. The apparatus according to claim 51, wherein the CHO configuration information comprises a time-based trigger condition, the time-based trigger condition comprises second time and a second duration, the second time is start time of the time-based trigger condition, and the second duration is a duration of the time-based trigger condition, wherein the first time is the second time, or the first time is a sum of the second time and the second duration.

53. A communication apparatus, comprising:
a processing module, configured to determine access indication information; and
a transceiver module, configured to separately send the access indication information to one or more terminal devices, to indicate the one or more terminal devices to separately initiate access to a target cell of the communication apparatus, wherein after receiving first indication information from a first network device, the one or more terminal devices separately initiate the access to the target cell based on the access indication information.

54. The apparatus according to claim 53, wherein the transceiver module is specifically configured to:
separately send the access indication information to the plurality of terminal devices, wherein the second network device sends the access indication information to the terminal devices on different sending occasions, or the second network device separately sends, to the plurality of terminal devices on different sending occasions, the access indication information indicating time-frequency resources used by the plurality of terminal devices to initiate the access, and different time-frequency resources are configured for the plurality of terminal devices.

55. The apparatus according to claim 53 or 54, wherein the transceiver module is further configured to:
separately send second indication information to the one or more terminal devices, wherein the second indication information indicates the one or more terminal devices to select a first reference signal, the first reference signal belongs to at least one reference signal corresponding to the target cell, and the first reference signal is used for radio link detection and/or beam failure detection.

56. The apparatus according to claim 55, wherein the second indication information comprises any one of the following:
configuration information of the first reference signal;
first information and second information, wherein the first information indicates configuration information of the at least one reference signal, and the second information comprises an index of the configuration information of the first reference signal;
a mapping relationship between at least one reference signal corresponding to a source cell and the at least one reference signal corresponding to the target cell, wherein the source cell is managed by the first network device; or
a mapping relationship between configuration information of the at least one reference signal corresponding to the target cell and a geographical location area.

57. The apparatus according to any one of claims 53 to 56, wherein the access indication information comprises third indication information, the third indication information indicates a second reference signal, and the second reference signal is used by the terminal device to determine an access occasion.

58. The apparatus according to any one of claims 53 to 57, wherein the access indication information comprises fourth indication information, and the fourth indication information comprises a first time interval, indicating the terminal device to initiate the access to the target cell after the first time interval since the terminal device receives the access indication information.

59. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 13, the method according to any one of claims 14 to 23, or the method according to any one of claims 24 to 29.

60. A communication system, comprising a first network device and a second network device, wherein the first network device is configured to perform the method according to any one of claims 14 to 23, and the second network device performs the method according to any one of claims 24 to 29.

61. The communication system according to claim 60, wherein the communication system further comprises a terminal device, and the terminal device is configured to perform the method according to any one of claims 1 to 13.

62. A computer-readable storage medium, wherein the computer-readable storage medium stores a computer program; and when the computer program is executed by a computer, the computer is enabled to perform the method according to any one of claims 1 to 13, the method according to any one of claims 14 to 23, or the method according to any one of claims 24 to 29.

63. A computer program product, wherein the computer program product stores a computer program, and when the computer program is executed by a computer, the computer is enabled to perform the method according to any one of claims 1 to 13, the method according to any one of claims 14 to 23, or the method according to any one of claims 24 to 29.
